# EUROPÄISCHE PATENTSCHRIFT

(11) **EP 2 280 497 B1**
(45) Veröffentlichungstag und Bekanntmachung des Hinweises auf die Patenterteilung: **26.11.2014**
(21) Anmeldenummer: 10167171.7
(22) Anmeldetag: 24.06.2010
(51) Int. Cl.: H04B 7/26, H04B 7/155

(54) **Gleichwellen-Funknetzvorrichtung**
Simulcast radio network device
Dispositif de réseau radio en onde continue

(30) Priorität: 08.07.2009 DE 102009032384; 25.09.2009 DE 102009042790
(43) Veröffentlichungstag der Anmeldung: 02.02.2011
(73) Patentinhaber: KaiTec GmbH, 63768 Hösbach (DE)
(72) Erfinder: Kaiser, Stefan, 63846, Laufach (DE)
(74) Vertreter: Spachmann, Holger

(56) Entgegenhaltungen:
- EP-A1- 0 635 988
- WO-A2-97/12455
- GB-A- 2 368 494
- ALEJANDRO MORAN ET AL: "Quasi-Synchronous Digital Trunked TETRA Performance", IEEE TRANSACTIONS ON VEHICULAR TECHNOLOGY, IEEE SERVICE CENTER, PISCATAWAY, NJ, US, Bd. 48, Nr. 3, 1. Mai 1999 (1999-05-01), XP011063865, ISSN: 0018-9545

## Beschreibung

Die Erfindung betrifft eine Gleichwellen-Funknetzvorrichtung, die mindestens eine zentrale Funknetz-Steuereinrichtung und mindestens zwei für digital kodierte Funksignale vorgesehene Funkzelleneinrichtungen umfasst. Des Weiteren betrifft die Erfindung ein Verfahren zum Betrieb einer solchen Gleichwellen-Funknetzvorrichtung und ein Verfahren zur Umrüstung bereits bestehender analoger Funknetzvorrichtungen in erfindungsgemäße Funknetzvorrichtungen.

Die Erfindung betrifft insbesondere ein Bündelfunksystem, insbesondere ein BOS-Funksystem, die erfinderische Idee kann jedoch auch auf bestehende oder neu zu schaffende flächendeckende Funkkommunikationssysteme, beispielsweise GPS, GPRS, EDGE oder UMTS, angewendet werden.

Ein Bündelfunksystem ist ein Überbegriff für Funksysteme verschiedener Standards, wobei TETRA, TETRAPOL und APCO 25 die bekanntesten digitalen Standards sind und MPT-1327, SMARTNET und SMARTZONE sowie analoge Gleichwellennetztopologien nach dem BOS-Standard die entsprechenden analogen Funknetzsysteme repräsentieren. Ebenfalls verschiedene Mobilfunkdienste arbeiten nach diesem Standard und ermöglichen eine Kanalbündelung, bei der nicht jedes Netz für sich oder jede Firma, die ein innerbetriebliches drahtloses Kommunikationsnetz betreibt, eine eigene Infrastruktur mit Funkturm, Feststation, usw. ausbauen muss, sondern einen gemeinsam genutzten Standard verwendet. Somit müssen nicht viele Funkkanäle individuell jeder Firma zugewiesen werden, sondern ein Netzbetreiber hat an seinem Standort vier oder acht Kanäle in Betrieb, die bedarfsweise an die verschiedenen Nutzer freigeschaltet werden können. Zur Erhöhung der Funkreichweite (Abdeckung) können mehrere Funktürme über Standleitung oder Richtfunkstrecken zusammengeschaltet werden.

Ein wichtiges Anwendungsgebiet der Bündelfunktechnik und insbesondere der unten erläuterten analogen Gleichwellentechnik ist der BOS-Funk. Der BOS-Funk ist ein nicht-öffentlicher mobiler UKW-Landfunkdienst in Deutschland, der von Behörden und Organisationen mit Sicherheitsaufgaben (BOS) verwendet wird. Er ist durch die BOS-Funkrichtlinie reglementiert, die vom Bundesministerium des Inneren verfasst wurde. Ziel ist es, einen sicheren und störungsfreien Funkbetrieb aller Bedarfsträger der BOS, insbesondere Polizei, Zoll, Technisches Hilfswerk, Feuerwehren, Katastrophenschutzbehörden, Rettungsdienste etc., zu gewährleisten. Die Besonderheit des BOS-Funks besteht darin, dass diese Frequenzzuweisungen jeweils die Genehmigung enthalten, neben den zugewiesenen Frequenzen zum Zweck der Zusammenarbeit mit anderen BOS auch deren Frequenzen nutzen zu dürfen. Behördenfunk wurde bis Ende der 80er Jahre weltweit mit analogen Funknetzen im 2- und 4-Meter-Band (BOS-Funk) betrieben. Die fehlenden oder zu schwachen Verschlüsselungsmöglichkeiten für den Analogfunk führten zur Entwicklung digitaler Systeme.

Der Mitte der 90er Jahre entwickelte TETRA-Standard wird in vielen europäischen und außereuropäischen Ländern genutzt. TETRA (Terrestrial Trunked Radio - ursprünglich Trans European Trunked Radio) ist ein Standard für digitalen Bündelfunk. Er ist als universelle Plattform für die unterschiedlichsten Mobilfunkdienste gedacht. Mit TETRA lassen sich Universalnetze aufbauen, über die der gesamte betriebliche Mobilfunk von Anwendern mit besonderen Sicherheitsanforderungen, wie Behörden und Organisationen mit Sicherheitsaufgaben, der Industrie, ÜPNV, Flughäfen und Militär, abgewickelt werden kann. Das TETRA-Funknetz ist technologisch zellulär; Zellwechsel und damit Gesprächsweitergabe ist im gesamten Netz möglich - in dieser Hinsicht entspricht der prinzipielle Aufbau eines BOS-Funknetzes - ob digital oder analog - der Struktur des weit verbreiteten Mobilfunknetzes GSM. Die tatsächliche Zulässigkeit der Zellnutzung wird jedoch auf Verbindungsnetzebene geregelt, hier kommen u. a. auch die Leitstellen ins Spiel. Das TETRA-Netz verhält sich im Prinzip wie ein IT-Netz mit Netzberechtigungen und Ausschlüssen sowie Möglichkeiten zur Zusammenschaltung von Benutzergruppen und Funktionen. Die Luftschnittstelle, also das eigentliche Funknetz, liefert dann nur noch den Zugriff darauf und überträgt digitale Signale. Diesen Netzmodus nennt man "Trunked Mode" (TMO-Modus), also vermittelten Modus. Die Fähigkeiten von TETRA-Endgeräten zum "Direktmodus" (DMO-Modus) und "Trunked-Modus" (TMO-Modus) müssen durch entsprechende Frequenzplanung / Kanalzuweisung im Netz berücksichtigt werden. Dies geschieht zum Beispiel durch Freihalten solcher Kanäle.

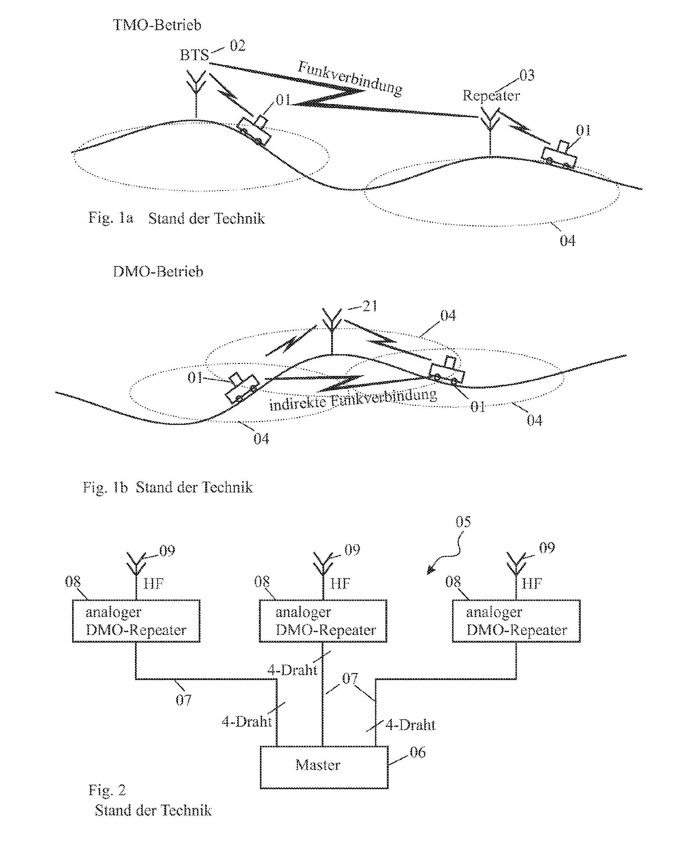

Ein Kernproblem der Bündelfunktechnik besteht darin, dass, wenn sich ein Endgerät außerhalb der Reichweite einer Funkzelle befindet, dieses von der weiteren Kommunikation innerhalb des Funknetzes ausgeschlossen ist. Um dieses Problem in TETRA-Netzen zu lösen, können die Endgeräte zum einen direkt miteinander im sog. "Direct Mode" (DMO) kommunizieren, zum anderen indirekt über TMO-Repeater im TMO-Modus angebunden werden, siehe hierzu **Fig. 1a****.** TMO-Repeater sind dabei in der Lage, eine zelluläre und vermittelnde Funktionalität aufrechtzuerhalten.

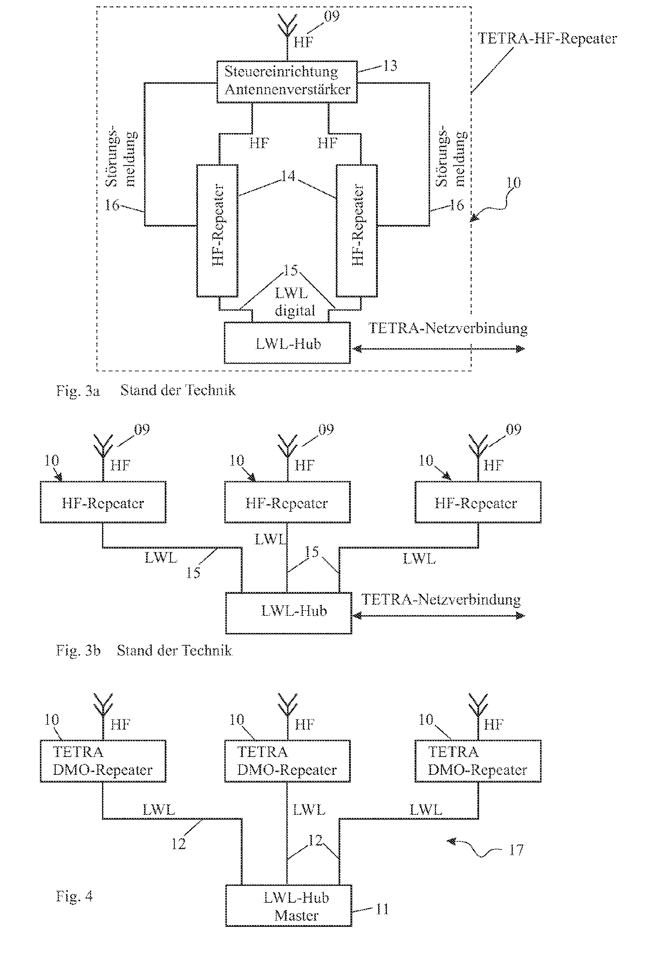

Die Reichweite von Endgeräten im DMO-Modus untereinander ist - besonders innerhalb von Gebäuden - stark eingeschränkt und nicht kalkulierbar. Zur Reichweitenerhöhung in schlecht oder nicht versorgten Gebieten und Umgebungen, worunter insbesondere weit verzweigte Gebäude fallen, werden häufig Repeater-Verfahren mittels sog. TETRA-HF-Repeater für den DMO-Mode bevorzugt, die das Signal der Endgeräte mit neuer Sendeleistung abstrahlen, aber keine zelluläre Funktionalität wie im TMO-Modus aufweisen, siehe hierzu **Fig. 1****b.** Ist der Einsatz von mehreren TETRA-Antennennetzwerken, d.h. mehreren Antennenverstärkern, die an einen HF-Repeater angeschlossen sind, erforderlich, muss für die Zusammenschaltung der Antennen ein kostenintensives Übertragungs- und Verteilungsnetzwerk, insbesondere ein aktives / passives Lichtwellenleiter-Netzwerk (LWL-Netzwerk), nachträglich realisiert werden, wie es beispielsweise in **Fig. 3b** dargestellt ist.

Je nach den oben vorgestellten Gegebenheiten kommen zur Verbesserung der Funkversorgung zwei verschiedene Varianten von Repeaterlösungen nach der ETSI-Standardisierung zum Einsatz:
- "TMO - Trunked Mode Operation" (ETSI TS 101 789-1 und EN 300 392-2) - in **Fig. 1a** dargestellt
- "DMO - Direct Mode Operation" (ETSI EN 300 396xx, ETS 300 396xx und EN 300 396xx) - dargestellt in **Fig. 1b**

Der TMO-Modus kommt meist für lokale TETRA-Versorgungsgebiete als Füllsender zum Einsatz. Dabei sind Signallaufzeiten zwischen der Funkzelleneinrichtung und dem Repeater sowie ein hoher Entkopplungsfaktor zu beachten. Die entsprechende Hardware steht als Kanal oder Bandrepeater von verschiedenen Herstellern zur Verfügung.

Der DMO-Modus lässt sich in einen direkten DMO-Betrieb zwischen zwei Endgeräten, einen DMO-Repeaterbetrieb, bei dem zwei oder mehrere Endgeräte über einen DMO-Repeater zur Erhöhung der Antennenreichweite miteinander verbunden sind, und einen DMO-Gateway-Betrieb unterteilen. Die DMO-Gateway-Funktion ermöglicht die Erweiterung eines TMO-Netzes in nicht versorgten, lokalen TETRA-Versorgungsbereichen und ermöglicht die Versorgung eines Endgerätes über die Reichweite des TMO-Netzes hinaus mittels eines DMO-Repeaters, wobei jedoch keine Kanalvermittlung sondern - wie oben erwähnt - eine Direktverbindung erstellt wird. Hierbei handelt es sich um Leistungsmerkmale von Endgeräten, insbesondere Funkgeräten (Handfunk oder Fahrzeugfunkgeräte), die im DMO-Modus der Repeater-Funktion eine Reichweitenerhöhung zwischen Endgeräten ermöglichen. Die Funkgeräte können in der Regel zwischen TMO- und DMO-Betrieb umschalten. Für diese Betriebsart sind bei der Bundesnetzagentur (BNetzA) DMO-Frequenzen zu beantragen.

DMO-Repeater ermöglichen je nach Funkgeräteart einen Einsatz mit unterschiedlichen Sendeleistungen und können somit auch Antennennetzwerke speisen, zum Beispiel eine Versorgung des Gebäudeinneren oder eine Tunnelversorgung gewährleisten. Schematisch ist ein solcher DMO-Betrieb in **Fig. 1b** dargestellt.

Bei dem DMO-Betriebsverfahren gibt es drei unterschiedliche Betriebsarten:
- Betriebsart 1a: Downlink (Signal von Senderstandort zum Funkempfänger) und Uplink (Signal vom Funkgerät zum stationären Sender- / Empfängersystem) sind auf einer Frequenz (hier bei der Betrachtung im 70 cm-Bereich), jedoch in unterschiedlichen Zeitschlitzen übertragen. Eine Simplex-Sprachkommunikation - d.h. eine Sprachkommunikation in einer Richtung - ist möglich.
- Betriebsart 1b: Downlink und Uplink liegen auf einer Duplexfrequenz (definiertes Frequenzpaar), eine Sprachkommunikation ist möglich.
- Betriebsart 2: Downlink und Uplink liegen auf einer Duplexfrequenz, Vollduplex ist möglich, die Frequenznutzung ist wie beim Betrieb 1b.

Bei allen Betriebsarten werden gleiche Protokolle nach EN 300 396 verwendet.

Insbesondere in Gebäuden können außerhalb befindliche Funkzelleneinrichtungen nur schwer bis ins Gebäudeinnere, insbesondere in dickwandige Gebäude oder Kellerbereiche, strahlen. Aus diesem Grund werden Funknetzvorrichtungen basierend auf Gleichwellen-Abstrahltechnik verwendet, um einen DMO-Betrieb von Endgeräten, meist Einzelfunkgeräten, innerhalb des Gebäudes und eine Kommunikation zwischen im Gebäude befindlichen Personen mit Endgeräten und außerhalb des Gebäudes befindlichen Kommunikationspartnern herzustellen.

Bei der herkömmlich verwendeten analogen Funkversorgung werden sog. Gebäudefunkanlagen (nach Vorgabe der Behörden und Organisationen für Sicherheit - BOS → technische Richtlinie BOS - TR BOS) zum Einsatz gebracht. Hierbei werden eine Mastereinheit als zentrale Funknetzsteuereinrichtung und je nach Funkversorgungsumfeld verschiedene Slave-Systeme als mit der Funknetz-Steuereinrichtung verbundene Funkzelleneinrichtungen über 4-Draht-Leitungen angeschaltet, wobei die 4-Draht-Leitungen die auszutauschenden analogen Signale über die Funknetzsteuereinrichtung an alle angeschlossenen Funkzelleneinrichtungen weitergeben. An diese Funkzelleneinrichtungen werden entsprechende passive Antennennetzwerke angeschaltet, die vornehmlich im 2-Meter- oder 4-Meter-Band abstrahlen.

Die Funkvorrichtung arbeitet meist auf einer Gleichwellen-Architektur (gleiche Funkfrequenz für die gesamte Kommunikation) und stellt Einsatzkräften eine gleichmäßige DMO-Funkkommunikation zur Verfügung. Dabei werden feuerwehrspezifische Einrichtungen an diesem Standort miteinbezogen. Ein Gleichwellennetz, auch SFN (Single Frequency Network) genannt, besteht aus mehreren räumlich über ein zusammenhängendes Gebiet verteilten Sendeanlagen, welche synchron zueinander und unter Nutzung derselben Senderfrequenz identische Informationen ausstrahlen. Das Ziel ist die Versorgung eines größeren, zusammenhängenden Bereichs, als es aufgrund des Geländes mit nur einem Sender möglich wäre. Zudem können so Frequenzkapazitäten eingespart werden, da alle Sender das gleiche Frequenzband benutzen. Die knappe Ressource von Funkfrequenzen wird dadurch besser genutzt. Damit eine Gleichwellen-Kommunikation hergestellt werden kann, gelten physikalische Einschränkungen, wobei beispielsweise Auswirkungen durch Interferenz durch zusätzliche technische Maßnahmen bei der Informationsübertragung kompensiert werden können.

Dabei sind bei der Realisierung von Gleichwellenfunknetzen mehrere Faktoren sehr wichtig:
1. Alle Sender müssen zeitgleich die gleiche Information, wie beispielsweise das exakt gleiche Rundfunkprogramm oder die gleiche abzustrahlende Funkkommunikation aussenden; hierbei ist insbesondere eine hohe Frequenz- und Phasentreue aller Sender sowie eine synchrone Abstrahlung der zu sendenden Signale auch unter Berücksichtigung der verschiedenen Signallaufzeiten erforderlich.
2. Die Sendefrequenz muss bei allen Sendern gleich sein oder darf nur eine geringe Abweichung von einigen wenigen Hertz aufweisen. Ersterer Fall wird als synchrones Gleichwellennetz bezeichnet, letzterer Fall als asynchrones Gleichwellennetz.

Gleichwellennetze verwenden in digitalen Übertragungsverfahren, insbesondere im TETRA-Verfahren, digitale Modulationsverfahren mit mehreren Trägern, wie Coded Orthogonal Frequency Division Multiplex (COFDM), ein auf Orthogonal Frequency Division Multiplex (OFDM) basierendes Modulationsverfahren. Typische Gleichwellennetze sind die auf den Modulationsverfahren COFDM basierenden digitalen terrestrischen Fernsehprogramme DVB-T und das bei mobilen Geräten eingesetzte Digital Multimedia Broadcasting (DMB). Bei Hörfunkprogrammen findet ein Gleichwellenbetrieb im Rahmen von Digital Audio Broadcasting (DAB) Anwendung. Gleichwellennetze werden insbesondere im Bereich der Behörden und Organisationen mit Sicherheitsaufgaben mit dem BOS-Funk eingesetzt. Dabei finden sie insbesondere bei der Funkversorgung innerhalb von Gebäuden und geschlossenen Anlagen, wie beispielsweise Gruben- oder Kanalbauwerken, Anwendung.

In diesem Zusammenhang ist aus der EP 1 027 777 B1 ein Verfahren zur Übertragung von Informationen über eine Funkschnittstelle bekannt, bei der zwischen einem Endgerät und einer Funkzelleneinrichtung zumindest in einem Teilbereich des gesamten Funkversorgungsgebietes eine Gleichwellenübertragung mit einer einzigen Frequenz durchgeführt wird, indem mehrere der Funkzelleneinrichtungen die selbe Information gleichzeitig und mit der selben einzigen Frequenz zu mehreren Endgeräten übertragen.

Des Weiteren geht aus der DE 696 13 633 T2 ein Verfahren zur Kommunikation über einen Direktmoduskanal hervor, bei dem ein Endgerät über den Direktmoduskanal sendet und in dieser Übertragung Informationen bezüglich der verwendeten Sendeleistung einschließt, und ein zweites Endgerät oder eine Funkzelleneinrichtung die Übertragung über den Direktmoduskanal überwacht, die enthaltenen Informationen bezüglich der Sendeleistung speichert und die Qualität der Übertragung des Endgerätes misst, wobei es bzw. sie auf Ergebnis der Messung entscheidet, ob das Senden auf dem Direktmoduskanal begonnen werden kann.

Schließlich betrifft die GB 2 414 362 A eine Synchronisation von Endgeräten, die in einem TETRA-DMO-Verfahren kommunizieren, wobei mittels eines Timingverfahrens eine Synchronisation der Kommunikation erreicht wird.

Bezüglich einer Gleichwellen-Kommunikation innerhalb eines Gebäudes gibt es für den digitalen Bündelfunk, insbesondere für die TETRA-Inhouse-Versorgung, keine befriedigende Lösung, sodass ein Standard für eine TETRA-Gleichwellen-Funknetzversorgungseinrichtung nicht ersichtlich ist. Demgegenüber gibt es in der bisherigen analogen Funkversorgung eingeführte Standardausführungen, die für die künftige digitale Funkkommunikation in den nächsten Jahren zu migrieren sind. Diese in der analogen Technik bereits eingeführten technischen Lösungen haben sich bewährt, sind allerdings nicht eins zu eins für die digitale Welt nutzbar und müssen daher vollständig erneuert werden. Hierbei ergibt sich das Problem hoher Erneuerungs- und Austauschkosten, da die Funknetzvorrichtungen, die in der Regel aus mehreren Funkzelleneinrichtungen und einer Funknetzsteuereinrichtung aufgebaut sind, komplett auszutauschen sind. Hierbei spielen insbesondere der Bestandsschutz, die Zugehörigkeit zur Gebäudesubstanz und baulich verbundene Funknetzeinrichtungen, die mit dem Gebäudeobjekt verbunden sind, eine wichtige Rolle.

Aus dem Stand der Technik sind somit analogbasierte Gleichwellen-Funknetzeinrichtungen bekannt, wie sie in **Fig. 2** dargestellt sind. Diese umfassen mehrere analoge Funkzelleneinrichtungen, die als analoge DMO-Repeater ausgelegt sind. Diese sind über analoge Kommunikationsverbindungen mit einem Master - einer Funknetzsteuereinrichtung - verbunden, wobei beim Empfang eines Signals eines Endgeräts durch eine Funkzelleneinrichtung das empfangene Signal analog meist im NF-Bereich als Sprachsignal zur Steuereinrichtung weitervermittelt wird. Um eine störungsfreie Gleichwellen-Funkabstrahlung zu ermöglichen, muss das empfangene Signal synchron an alle angeschlossenen Funkzelleneinrichtungen weitergeleitet werden, um eine frequenz- und phasengenaue Abstrahlung im Gleichwellenfunknetz zu ermöglichen. Hierzu nimmt die Gleichwellen-Funknetzvorrichtung zum einen eine Detektion des stärksten Empfangssignals der von den mehreren Funkzelleneinrichtungen empfangenen Eingangssignale vor - beispielsweise durch Bestimmung des S/N-Verhältnisses, wählt eine Empfangsfunkzelleneinrichtung aus, und leitet deren Empfangssignal phasen- und frequenzgenau zu den angeschlossenen Funkzelleneinrichtungen zur synchronen Abstrahlung weiter.

Des Weiteren sind auf der TETRA-Digitalseite aus dem Stand der Technik die in den **Fig. 3a, 3b** dargestellten digitalen TETRA-Repeaternetzwerke bekannt, bei denen an eine nicht dargestellte BTS über einen Lichtwellen-HUB mehrere HF-Repeater als Funkzelleinrichtungen angeschlossen sind. Dieses Antennennetzwerk basiert allerdings nicht auf einem Gleichwellenprinzip, sondern verwendet TETRA-TMOtypische Frequenzbänder und entspricht in seiner Struktur der in **Fig. 1a** dargestellten Topologie. Werden die digitalen Empfangssignale von einem HF-Repeater empfangen, werden sie digital über Lichtwellenleiter an den Lichtwellen-HUB weitergeleitet, der diese wiederum an eine BTS weiterleitet, so dass diese in einem zellulären mehrkanaligen TETRA-Netzwerk weitergegeben werden. Hierzu ist keine synchronisierende Kommunikation zwischen Funkzelleneinrichtungen und Steuereinrichtung, in diesem Fall einer BTS, notwendig.

Der Artikel "Quasi-Synchronous Digital Trunked TETRA Performance", IEEE Transactions on vehicular Technology, IEEE Service Center, Piscataway, NJ, US, Bd. 48, Nr. 3, vom 1. Mai 1999, ISSN: 0018-9545 beschreibt eine quasi-synchrone TETRA-TMO-Funknetzvorrichtung, die eine zentrale Funknetz-Steuereinrichtung und zwei Funkzelleneinrichtungen zum Aussenden digitalbasierter Funksignale in einem quasisynchronen Frequenzband umfasst, bei dem nur ein geringer Versatz der HF-Träger vorhanden ist. Es wird untersucht, wie sich Laufzeitverzögerungen und Frequenzversatz auf die Empfangsqualität eines TMO-Empfängers auswirkt. Eine bidirektionale Kommunikation im TMO-Netz ist nicht beschrieben.

Aus der WO 97/12455 A2 geht eine gattungsgemäße Simulcast-Funkzellenvorrichtung für einEDACS-TMO-Funksystem hervor, die eine zentrale Funknetz-Steuereinrichtung und zwei Funkzelleneinrichtungen zum Empfang und Simulcast-Aussenden analoger Sprechfunksignale beinhaltet. In einem Überlappungsbereich der TMO-Funkzelleneinrichtungen wird eine verbesserte Sprachübertragung durch eine digitale Synchronisierung der analogen Sprachdaten erreicht.

Die EP 0 635 988 A1 betrifft eine gattungsgemäße TMO-Funkzellenvorrichtung zu Übertragung von Hoch- und Niedriggeschwindigkeitsdaten, bei der die Hochgeschwindigkeitsdaten auf Basis eines Taktsignals ausgesendet werden, und Niedrig- sowie Hochgeschwindigkeitsdaten über einen gemeinsamen digitalen Hochgeschwindigkeitsdatenkanal von der zentralen TMO-Funknetz-Steuereinrichtung an die Funkzelleneinrichtungen übertragen werden. Die Funkzelleneinrichtungen können mit der Steuereinrichtung über eine 4-Draht-Leitung verbunden sein.

Schließlich betrifft die GB 2 368 494 A eine DMO-Funkzellensystem mit einem DMO-Repeater und mehreren Endgeräten, , bei der die Endgeräte direkt oder indirekt über den DMO-Repeater miteinander kommunizieren können. Eine Entscheidung, ob die Endgeräte über den Repeater oder direkt kommunizieren wird auf Basis der Empfangsfeldstärke von Repeaterempfangssignal und Endgeräte-Empfangssignal getroffen.Ausgehend von diesem Stand der Technik werden eine Vorrichtung, ein Betriebsverfahren und ein Umrüstverfahren vorgeschlagen, um ein TETRA-Gleichwellenfunksystem für einen DMO-Betrieb zur Verfügung zu stellen sowie bestehende analoge Gleichwellen-Funknetzvorrichtungen durch einfache Maßnahmen in digitalbasierte TETRA-Gleichwellen-Funknetzvorrichtungen überführen zu können. Hierdurch können die Probleme einer kostspieligen Umrüstung und einer beschränkten Frequenznutzung umgangen und die Nutzung einer bereits vorhandenen Infrastruktur ermöglicht werden.

Im Oberbegriff schlägt hierzu Anspruch 1 vor, dass eine TETRA-DMO-Gleichwellen-Funknetzvorrichtung mindestens eine zentrale Funknetzsteuereinrichtung und mindestens zwei für den Empfang und die Aussendung von digital kodierten Funksignalen vorgesehene Funkzelleneinrichtungen zur Gleichwellen-Funkkommunikation von digitalsignalbasierten Endgeräten umfasst. Die Funkzelleneinrichtungen sind dabei über eine Kommunikationsverbindung in steuernder Kommunikation mit der Steuereinrichtung zur synchronisierten Abstrahlung von mindestens einem durch eine Funkzelleneinrichtung empfangenen digitalen Empfangssignal eines Endgeräts verbunden.

Mit anderen Worten umfasst die Gleichwellen-Funknetzvorrichtung eine vergleichbare Topologie und Komponenten wie der bisherige analoge Standard, d.h. sie umfasst eine zentrale Funknetzsteuereinrichtung sowie zwei oder mehrere abgesetzte und räumlich getrennte Funkzelleneinrichtungen als Relaisstellen zur flächendeckenden Versorgung eines unterversorgten Abstrahlungsgebietes, insbesondere eines Gebäudes. In den Funkzelleneinrichtungen werden digitale Endgeräte, insbesondere TETRA-Endgeräte, in einem DMO-Repeater-Mode eingesetzt. Die Steuereinrichtung übernimmt die Steuerung und Synchronisation der angeschalteten Funkzelleneinrichtungen, die als Gleichwellensystem (gleiches Frequenzpaar) betrieben werden. Dabei ist es wichtig, dass bei einer Zusammenschaltung der Funkzelleneinrichtung ein zuverlässiger Betrieb des gesamten Gleichwellen-Funksystems ermöglicht wird, insbesondere sollten die HF-Baugruppen der Sendeeinheit des DMO-Repeaters für den TX-Betrieb (Sendebetrieb) hochstabil ausgeführt und auf derselben Trägerfrequenz abgeglichen werden. Jedoch kann in gewissen Toleranzbereichen eine geringfügige Abweichung der Trägerfrequenzen toleriert werden.

Erfindungsgemäß umfasst die Funkzelleneinrichtung eine digitaltaugliche Downlink-Funkempfangseinheit und eine digitaltaugliche Uplink-Funksendeeinheit, wobei die Empfangseinheit ein digital basiertes Funkkommunikationssignal als digitales Empfangssignal empfangen und die Sendeeinheit ein digital basiertes Funkkommunikationssignal als digitales Sendesignal synchronisierbar abstrahlen kann. Mit anderen Worten umfasst die Funkzelleneinrichtung zwei getrennte digitaltaugliche Einheiten, wobei eine Einheit als Funkempfangseinheit und die andere Einheit als Funksendeeinheit dient.

Dabei ist es weiterhin vorstellbar, dass beide Einheiten als herkömmliche TETRA-DMO-Repeater ausgelegt sind, wobei ein TETRA-DMO-Repeater bezüglich der Luftschnittstelle (Funkseite) nur auf Empfangsmode und ein TETRA-DMO-Repeater nur auf Sendemode geschaltet ist. Die jeweilige komplementäre Sende- bzw. Empfangseinheit der beiden Repeater kommuniziert über die Kommunikationsverbindung mit der Steuereinrichtung, hierzu ist die Sende- bzw. Empfangseinheit an eine Steuer- und A/D-Wandlungseinheit innerhalb der Funkzelleneinrichtung angeschlossen, die die erforderliche D/A-Wandlung der Empfangs- und A/D-Wandlung der synchronisiert abzustrahlenden Sendesignale vornimmt. Somit ist es durchaus denkbar und vorteilhaft, dass die Sende- und Empfangseinheiten jeweils einen TETRA-DMO-Repeater umfassen, wobei ein Repeater bezüglich der Luftschnittstelle im Sende- und ein Repeater im Empfangsmode arbeitet.

In einer vorteilhaften Ausführungsform ist die steuernde Kommunikationsverbindung eingerichtet, um digital kodierte Sende- und Empfangssignale zwischen Funkzelleneinrichtung und Steuereinrichtung zur synchronisierten Abstrahlung des empfangenen digitalen Empfangssignals auszutauschen. Hierzu kann die erforderliche synchronisierte Abstrahlung auf Basis von digitalen Synchronisierungsinformationen erfolgen, die von jeder Funkzelleneinrichtung über die Kommunikationsverbindung von der Steuereinrichtung empfangen wurde. Diese werden innerhalb jeder Funkzelleneinrichtung ausgewertet, um eine Abstrahlung synchronisiert mit allen weiteren Funkzelleneinrichtungen zu ermöglichen. Mit anderen Worten tauschen die Funkzelleneinrichtungen alle notwendigen Informationen zur synchronisierten Abstrahlung gegenseitig mittels eines geeigneten Übertragungsprotokolls aus, insbesondere Empfangsfeldstärke, BER (Bit Error Rate) und andere empfangsqualitätsbeschreibende Parameter, sowie Timing-Parameter über den Empfangszeitpunkt etc., wobei dezentral jede Funkzelleneinrichtung entscheidet, welcher Empfangsdatensatz zur Abstrahlung herangezogen wird. Die Funkzelleneinrichtungen sind darauf eingerichtet, digitale Synchronisierungsinformationen zur synchronen Abstrahlung auszutauschen. Daneben ist jedoch auch eine Auswahl der Empfangsfunkzelleneinrichtung sowie eine Steuerung der synchronen Abstrahlung durch die Steuereinrichtung denkbar.

Dabei kann die steuernde Kommunikationsverbindung der volldigitalen TETRA-Gleichwellen-Funknetzvorrichtung eine Lichtwellenleiterverbindung (LWL-Verbindung) sein. Somit wird der Einsatz hochbitratiger und günstig erhältlicher LWL-Komponenten ermöglicht, wobei die Steuereinrichtung zumindest einen LWL-Hub umfassen kann. Hierbei können die bereits aus dem Stand der Technik nach **Fig. 3b** verwendeten HF-Repeater, die über eine LWL-Schnittstelle verfügen, innerhalb eines solchen Systems eingesetzt werden. Daneben ist eine Verwendung einer vergleichbaren digitalen Verbindung wie drahtgebundene LAN-Verbindung, Powerline (Datenmodulation über Stromnetz) serielle- oder parallele Netzwerkverbindung, drahtlose WLAN-Verbindung oder ähnliches denkbar sein, auch kann eine Verbindung über ein IP-Protokoll mittels Internet und den hierbei zur Verfügung stehenden Verbindungsmitteln hergestellt werden. So ist denkbar, zur Herstellung der steuernden Kommunikationsverbindung ein schnelles Computer- und Routernetzwerk heranzuziehen, oder über Internetverbindung entfernte Gebäude miteinander zu verbinden.

In einer vorteilhaften Ausführungsform tauscht die steuernde Kommunikationsverbindung analog kodierte Sende- und Empfangssignale zwischen den Funkzelleneinrichtungen und der Steuereinrichtung zur synchronisierten Abstrahlung des empfangenen digitalen Empfangssignals aus. Somit sind für eine Umrüstung eines analogen in ein digitales Gleichwellenfunksystem lediglich Modifikationen der Funkzelleneinrichtungen erforderlich. Eine bereits in analogen Systemen verwendete Steuereinheit, die auf Basis eines DSP-ausgewerteten Signal/Rauschverhältnisses eine Empfangseinrichtung auswählt, ist beispielsweise die Synchron-2010-Steuereinheit der Fa. KaiTec GmbH, Hösbach, oder eine Teleregent-Funkanlagen-Steuereinheit der Fa. EADS Deutschland GmbH, München.

In der Steuereinrichtung findet sich in der Regel eine Empfangsdiversity, die die empfangenen analogen Signale aller Stationen empfängt. Diese vergleicht die Qualität der empfangenen Signale und leitet das beste, d.h. in der Regel rauschärmste und amplitudenstärkste Signal an alle Funkzelleneinrichtungen zur synchronen Abstrahlung weiter. Jedoch kann die Beurteilung der Empfangsqualität auch andere Kriterien, wie beste Sprachverständlichkeit, phonetische Qualität etc., betreffen.

Somit schlägt diese Ausführungsform eine Vorrichtung vor, die auf der Infrastruktur eines analogen Gleichwellen-Funknetzsystems basiert, jedoch in unüblicherweise Weise digital empfangene Signale in analoge NF-Signale wandelt, die beispielsweise über eine 4-Draht-(Kupfer-) Leitung analog zumeist niederfrequent als Audiosignale zu einer Steuereinrichtung übermittelbar sind, wobei diese eine auf den Analogsignalen basierte Synchronisation zur synchronen Gleichwellenabstrahlung vornimmt. Hierdurch wird in besonderer Weise eine synchronisierte Abstrahlung digitaler Repeater auf Basis einer im Analogbereich, insbesondere im Tonfrequenzbereich, ermittelten Synchronisation der auszusendenden Analogsignale ermöglicht.

In einem möglichen und vorteilhaften Ausführungsbeispiel umfassen die Funkzelleneinrichtungen mindestens einen TETRA-DMO-Repeater und mindestens eine A/D-Wandlungs- und Steuereinheit zur wechselseitigen A/D-Wandlung der Sende- und Empfangssignale. Somit können die DMO-Funkzelleneinrichtungen als Repeater einen Repeater nach dem TETRA-DMO-Standard umfassen, der an einer A/D-Wandlungs- und Steuereinheit angeschlossen ist, um eine analoge Kommunikation mit einer analog arbeitenden Steuereinrichtung zu ermöglichen. Dabei ist es denkbar, dass der TETRA-DMO-Repeater ein handelsüblicher TETRA-DMO-Repeater ist, und eine A/D-wandelnde Steuereinheit umfasst, die eine digital-analoge Konversion von digitalen Empfangssignalen vornimmt, die zur Steuereinrichtung weitergeleitet werden, und von der Steuereinrichtung empfangene analoge Signale digital wandelt und zum TETRA-DMO-Repeater zur synchronisierten Abstrahlung weiterleitet.

Des Weiteren ist es vorteilhaft, dass die Funkzelleneinrichtung eine D/Awandelnde Downlink-Wandlungs- und Steuereinheit umfasst, die der Empfangseinheit nachgeschaltet ist, und die das digitale Empfangssignal der Empfangseinheit in ein analoges Empfangssignal zur Weiterleitung über die Kommunikationsverbindung zur Steuereinrichtung wandeln kann. Des Weiteren ist es ebenfalls vorteilhaft, dass die Funkzelleneinrichtung eine A/D-wandelnde Uplink-Wandlungs- und Steuereinheit umfasst, die der Sendeeinheit vorgeschaltet ist, und die das analoge Sendesignal, das von der Steuereinrichtung über die Kommunikationsverbindung synchronisiert an alle Funkzelleneinrichtungen weitergeleitet wird, in ein digitales Sendesignal zur Abstrahlung über die Sendeeinheit wandeln kann. Mit anderen Worten schlägt diese vorteilhafte Weiterentwicklung eine Funkzelleneinrichtung vor, in der der Uplink und der Downlink des abzustrahlenden bzw. des zu empfangenden Signals vollkommen elektrisch zumindest im Digitalbereich, aber auch im HF-Bereich, getrennt sind. Hierzu umfasst diese Funkzelleneinrichtung eine Empfangseinheit und danach nachgeschaltet eine D/A-wandelnde Downlink-Kommunikations- und Steuereinheit, die das zu empfangende digitale Signal in ein analoges Signal zur Übermittlung über die analoge Kommunikationsverbindung zur Steuereinheit übertragen kann, und parallel hierzu eine A/D-wandelnde Uplink-Kommunikations- und Steuereinheit, die ein zu empfangendes analoges Signal von der Steuereinheit zur synchronisierten Abstrahlung an die digitale Sendeeinheit in ein digitales zu sendendes Signal umwandeln kann. Insbesondere der Einsatz zweier TETRA-DMO-Repeater, wobei ein Repeater als Empfangseinheit und ein Repeater als Sendeeinheit genutzt wird, kann durch die nachgeschalteten A/D- und D/A-Wandlungs- und Steuereinheiten in einem bestehenden analogen Gleichwellenfunksystem einfach und kostengünstig ermöglicht werden.

Des Weiteren ist es durchaus denkbar und vorteilhaft, dass die Funkzelleneinrichtung eine Gleichwellen-Synchronisierungseinheit umfasst, die den Sende- und Empfangsbetrieb aller Sendeeinheiten aller Funkzelleneinrichtungen synchronisieren kann. In dem Fall, in dem eine getrennte Sende- und Empfangseinheit innerhalb einer Funkzelleneinrichtung umfasst sind, ist es durchaus vorteilhaft, zumindest die Frequenz- und Phasenlage für den Sendebetrieb zu synchronisieren. Hierzu kann eine Gleichwellen-Synchronisierungseinheit dienen, die gegebenenfalls synchron zu den Gleichwellen-Synchronisierungseinheiten aller Funkzelleneinrichtungen des Gleichwellenfunksystems arbeitet und eine Synchronisation von Sende- und Empfangseinheit insbesondere in Bezug auf Amplitudengang, Frequenz und Phase ermöglicht. Bevorzugt ist die Gleichwellen-Synchronisierungseinheit als hochstabiler Referenzoszillator ausgelegt, wobei die Referenzoszillatoren aller Funkzelleneinrichtungen aufgrund ihrer hohen Frequenz- und Phasentreue über die Lebensdauer der Funkzellenvorrichtung synchronisierte Taktfrequenzen liefern. Jedoch haben praktische Tests gezeigt, dass geringfügige Abweichungen der Referenzoszillatoren voneinander tolerierbar sind. Des weiteren können die Gleichwellen-Synchronisierungseinheiten insbesondere bei von der Steuereinheit empfangenen analogen Sendesignalen eine Amplitudenanpassung des auszusendenden analogen Sendesignals mittels Equalizer oder frequenzselektive Verstärker vornehmen, um eine identische Digitalkodierung der Sendesignale aller Sendeeinheiten zu ermöglichen

In einer weiteren vorteilhaften Ausführung des Gleichwellenfunknetzes umfasst die Steuereinrichtung eine Funkzellenmultiplexeinheit, die die analogen Empfangssignale aller Funkzelleneinrichtungen aufnehmen kann, eine Beurteilung des störungsärmsten Empfangssignals vornehmen kann, und dieses Empfangssignal als analoges Sendesignal synchronisiert an alle Funkzelleneinrichtungen zur digitalen Abstrahlung zuführen kann. Mit anderen Worten umfasst die Steuereinrichtung eine Funkzellenmultiplexeinheit, die Signale aller Funkzellen gleichzeitig empfangen kann, und diese insofern auswerten kann, als sie das störungsärmste Empfangssignal, beispielsweise aufgrund eines guten Signalrauschverhältnisses, eines hohen Amplitudenpotenzials, einer niedrigen BER (Bit-Error-Rate) oder weiterer Kriterien, als über das Gleichwellennetz weiter zu transportierendes Empfangssignal auswählt, und ebenfalls über die Multiplexeinheit eine synchronisierte Weitergabe des so ausgewählten Sendesignals ermöglichen kann.

Hierbei ist es durchaus denkbar und vorteilhaft, dass für die synchronisierte Abstrahlung die Laufzeitunterschiede und spezifischen Eigenarten der Abstrahlung, wie z.B. die A/D-Wandlerzeit einzelner Funkzelleneinrichtungen, berücksichtigt werden, sodass die Multiplexeinheit beispielsweise an eine entfernt liegende Funkzelleneinrichtung die zu sendenden Signale mit leichtem Phasenversatz weitergeben kann, um eine synchrone Abstrahlung aller Funkzelleneinrichtungen zu ermöglichen.

In der Regel sind insbesondere in Altanlagen die steuernden Kommunikationsverbindungen zwischen den analogen Funkzelleneinrichtungen der analogen Steuereinheit als 4-Draht-Leitung ausgeführt. Hierbei sind in der Regel zwei Drähte für den Sende- und zwei Drähte für den Empfangsbetrieb vorgesehen, wobei PTT und Squelcheinstellungen (Rauschunterdrückungseinstellungen) ebenfalls über die Drähte übertragbar sind. Darauf aufbauend ist es vorteilhaft, wenn die vorgeschlagene digitalsignalverarbeitende Gleichwellen-Funknetzvorrichtung eine steuernde Kommunikationsverbindung in Form einer 4-Draht-Leitung nutzt, die hervorragend für die Übertragung analoger niederfrequenter Signale, insbesondere im Sprachbereich, ähnlich wie Telefondrahtleitungen verwendbar ist.

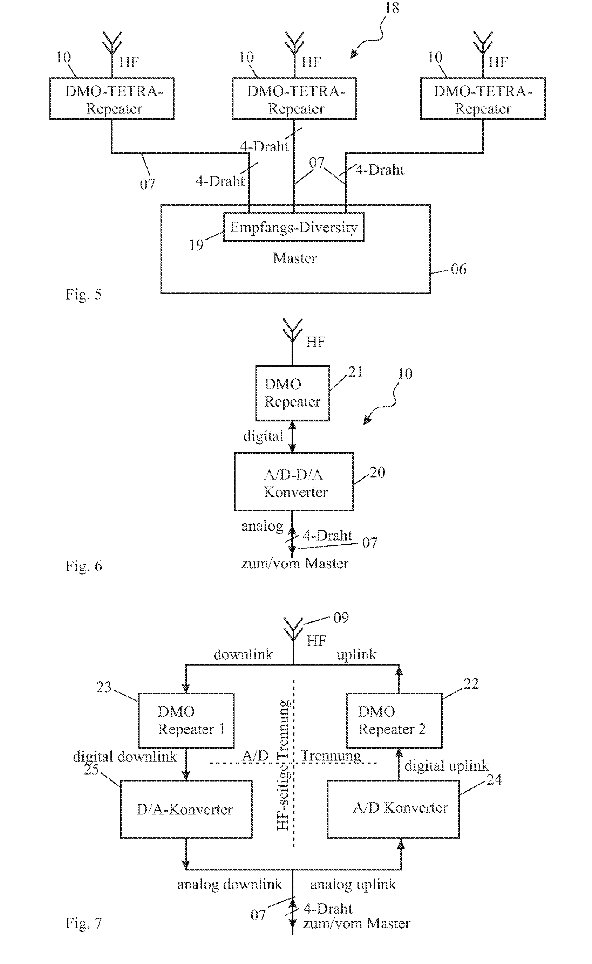

Eine weitere vorteilhafte Ausgestaltung schlägt eine Mehrfrequenz-Gleichwellen-Funkvorrichtung vor, bei der die Funknetzsteuervorrichtung in steuernder Kommunikation zu mindestens zwei Gruppen von Funkzelleneinrichtungen steht, wobei eine erste synchronisierte abstrahlende Gleichwellen-Funkzellengruppe mit einer Gleichwellenfrequenz *f*₁ und eine zweite synchronisiert abstrahlende Gleichwellen-Funkzellengruppe mit einer Gleichwellenfrequenz *f*₂ sendet und empfängt, wobei eine gemeinsame Abstrahlung eines von mindestens einer Funkzelleneinrichtung der ersten oder zweiten Funkzellengruppe empfangenen digitalen Empfangssignals durch die erste und die zweite Funkzellengruppe erfolgen kann. Mit anderen Worten betrifft eine solche Weiterentwicklung zwei Gruppen von Funkzelleneinrichtungen, die jeweils auf einer distinguierten Frequenz *f*₁ bzw. *f*₂ senden und empfangen, und die an einer gemeinsamen Steuereinrichtung angeschlossen sind. Empfängt auf einem der beiden Frequenzen mindestens eine Funkzelleneinrichtung ein Empfangssignal, so wird dieses analog an die Steuereinrichtung weitergegeben, die für eine synchronisierte Abstrahlung des Signals über die erste Funkzellengruppe mit der Gleichwellenfrequenz *f*₁ und davon unabhängig eine synchronisierte Abstrahlung über die zweite Funkzellengruppe mit der Gleichwellenfrequenz *f*₂ sorgt. Somit können insbesondere Gleichwellen-Funksysteme in zwei verschiedenen Gebäudeteilen betrieben werden, wobei die beiden verschiedenen Gleichwellen-Funksysteme sich aufgrund ihrer unterschiedlichen Frequenz nicht gegenseitig stören, oder es können zwei Gruppen von Kommunikationspartnern, die auf unterschiedlichen Frequenzen kommunizieren, über dieses Mehrfrequenz-Gleichwellen-Funksystem miteinander verbunden werden. Des Weiteren ist denkbar, dass die erste Gruppe der Funkzelleneinrichtungen mittels einer analogen Kommunikationsverbindung an die Steuereinheit angeschlossen ist, und die zweite Gruppe mittels einer digitalen Kommunikationsverbindung an die Steuereinheit angeschlossen ist, so dass sich eine Kombination der in den **Fig. 4** **und** **5** gezeigten Vorrichtungen ergibt.

Eine alternative, aber auch weiterentwickelte Ausführung schlägt eine weitere und mit der obigen Ausführung kombinierbare vorteilhafte Weiterentwicklung vor, bei der die Vorrichtung mindestens eine zweite Funknetzsteuereinrichtung mit angeschlossener Funkzelleneinrichtung umfasst, wobei die an der ersten Funknetzsteuereinrichtung angeschlossenen Funkzelleneinrichtungen eine erste synchronisiert abstrahlende Gleichwellen-Funkzellengruppe mit einer Gleichwellenfrequenz *f*₁ definieren, und die an der zweiten Funknetzsteuereinrichtung angeschlossenen Funkzelleneinrichtungen eine dritte Gleichwellen-Funkzellengruppe mit einer Gleichwellenfrequenz *f*₃ definieren. Hierzu sind die erste Funknetzsteuereinrichtung und die zweite Funknetzsteuereinrichtung zur gemeinsamen Abstrahlung eines von mindestens einer Funknetzeinrichtung der ersten oder dritten Funkzellengruppe empfangenen digitalen Signals verbunden. Mit anderen Worten betrifft diese Weiterentwicklung eine Zusammenschaltung zweier erfindungsgemäßer Funk-Gleichwellen-Funknetzsysteme, die jedoch auf unterschiedlichen Funkfrequenzen *f*₁ bzw. *f*₃ arbeiten. Durch eine Verbindung über eine Steuereinrichtungskommunikationsverbindung werden empfangene Signale von einer der beiden Funkzellengruppen an die jeweilige andere Funkzellengruppe durch Austausch von analogen oder auch digitalen Signalen zwischen den beiden Steuereinheiten ausgetauscht. Eine synchronisierte Abstrahlung erfolgt dann innerhalb der ersten und auch innerhalb der dritten Funkzellengruppe. Dabei ist es jedoch nicht erforderlich, dass die beiden Funkzellengruppen synchron miteinander das empfangene Signal wieder abstrahlen. Jedoch kann dies in besonderen Fällen auch vorteilhaft sein, um zum Beispiel bei Mobilfunkendgeräten keinen Phasenversatz zu zeigen. Auch in diesem Fall wäre es denkbar, dass die dritte Funkzellengruppe und die zweite Steuereinrichtung eine rein digitalbasierte Gleichwellen-Funknetzvorrichtung nach dem in **Fig. 4** dargestellten Prinzip darstellen, so dass ein Teil der gesamten Funknetzvorrichtung rein digital und der andere Teil "hybrid", d.h. digitalanalog, arbeitet.

Des Weiteren betrifft die Erfindung ein Verfahren zum Betrieb einer TETRA-Gleichwellen-Funkkommunikationsvorrichtung, die eine erfindungsgemäße Funkzellenvorrichtung nutzt. Im Rahmen des Verfahrens wird ein von einem digitalsignalbasierten Endgerät gesendetes und durch mindestens eine Funkzelleneinrichtung empfangenes digitales Empfangssignal durch die Funkzelleneinrichtung in ein Empfangssignal gewandelt, dieses Empfangssignal über eine steuernde Kommunikationsverbindung zu einer zentralen Funknetz-Steuereinrichtung weitergeleitet, wobei die Steuereinrichtung das störungsärmste Empfangssignal als weiterzuleitendes Empfangssignal auswählt, bzw. die diesbezügliche empfangende Funkzelleneinrichtung als Empfangsfunkzelle auswählt. Anschließend wird das Empfangssignal der Empfangsfunkzelle im Wesentlichen an alle Funkzelleneinrichtungen zur synchronisierten digitalen Gleichwellen-Abstrahlung als Sendesignal weitergeleitet.

Mit anderen Worten betrifft das Verfahren die synchronisierte digitale Abstrahlung eines von mindestens einer Funkzelleneinrichtung empfangenen Empfangssignals. Üblicherweise werden Funksignale von mehr als einer Funkzelleneinrichtung empfangen, so dass die Steuereinrichtung das für sie qualitativ hochwertigste Signal, d.h. das Signal mit der niedrigsten Bitfehlerrate, dem besten Signalrauschverhältnis, dem störungsärmsten Empfangssignal mit der besten Pegelamplitude auswählt, und dieses qualitativ hochwertigste Signal an alle angeschlossenen Funkzelleneinrichtungen weiterleitet, so dass diese das Empfangssignal auf digitaler Seite synchron abstrahlen, ohne dass es zu Überlagerungs- oder Interferenzeffekten in der Luftschnittstelle kommt.

Bevorzugt schlägt das Verfahren vor, dass die synchronisierte digitale Gleichwellen-Abstrahlung im Wesentlichen frequenz- und phasengleich erfolgt. Aufgrund einer frequenz- und phasengleich erfolgenden Abstrahlung wird eine synchrone Gleichwellen-Funkkommunikation ermöglicht, wobei ein Phasenunterschied von nahezu 0° insbesondere für Reflektionen und ein störungsfreies Übertragen der abzustrahlenden Signale an die Mobilendgeräte zu bevorzugen ist.

In einer vorteilhaften Ausführungsform des Verfahrens überträgt die steuernde Kommunikationsverbindung das Empfangssignal und das synchronisierend abzustrahlende Sendesignal digital kodiert, wobei zur Weiterleitung des synchronisierend abzustrahlenden Sendesignals digitale Synchronisierungsinformationen von der Steuereinrichtung an die Funkzelleneinrichtungen übermittelt werden, auf deren Basis die Funkzelleneinrichtungen die synchronisierte Abstrahlung des Sendesignals vornehmen. Hierzu gibt die Steuereinrichtung sowohl Synchronisationsinformationen als auch das auszustrahlende Signal an alle Funkzelleneinrichtungen aus. Alternativ ist es auch denkbar, dass nicht die Steuereinrichtung, sondern die Funkzelleneinrichtungen dezentral die Beurteilung der Empfangsqualität der empfangenen Signale, die Auswahl der Empfangsfunkzelleneinrichtung und die Synchronisation der Abstrahlung vornehmen.

Alternativ zum oberen Ausführungsbeispiel ist in einem besonders vorteilhaften Ausführungsbeispiel denkbar, dass das durch mindestens eine Funkzelleneinrichtung empfangene digitale Empfangssignal durch die Funkzelleneinrichtung in ein analoges Empfangssignal gewandelt wird, das analoge Empfangssignal über die steuernde Kommunikationsverbindung zu der zentralen Funknetz-Steuereinrichtung weitergeleitet wird, die Steuereinrichtung die das störungsärmste analoge Empfangssignal empfangende Funkzelleneinrichtung als Empfangsfunkzelle auswählt, und das analoge Empfangssignal der Empfangsfunkzelle im Wesentlichen an alle Funkzelleneinrichtungen zur digitalen Gleichwellen-Abstrahlung als synchronisiertes analoges Sendesignal weiterleitet. Somit greift dieses Ausführungsbeispiel auf eine Synchronisationstechnik zurück, die bereits aus einem analogen Gleichwellenfunknetz bekannt ist. Hierzu befindet sich vorteilhafterweise zwischen der digitalen Sende- und Empfangseinheit und der analog arbeitenden Steuereinheit eine analog-digital oder digital-analoge Wandlungseinheit, die sich grundsätzlich in den Funkzelleneinrichtungen befindet, sodass eine bereits vorhandene analoge Infrastruktur oder kostengünstig auf dem Markt erhältliche analoge Steuereinrichtungen für die synchronisierte Abstrahlung verwendet werden können.

Weiterhin ist eine denkbare Weiterentwicklung des Verfahrens vorstellbar, bei der die Steuereinrichtung zur synchronisierten Abstrahlung die Laufzeiten der analogen Empfangs- und/oder Sendesignale zu den Funkzelleneinrichtungen misst, und das ausgewählte analoge Empfangssignal unter Berücksichtigung der Laufzeiten zur zeitgleichen NF-amplituden-, NF- und HF-phasen- und NF- und HF-frequenzsynchronisierten Abstrahlung an alle Funkzelleneinrichtungen als analoges Sendesignal weiterleitet. Insbesondere die Berücksichtigung der Laufzeiten über die analoge Kommunikationsverbindung ermöglicht eine auf Luftschnittstellenseite amplituden-, phasen- und frequenzsynchronisierte Abstrahlung des Sendesignals, da lange Leitungswege oder längere Durchlaufzeiten durch elektronische Baugruppen wie A/D-Wandler und Repeater Verzögerungen in der Abstrahlung verursachen, die zu Phasenunterschieden führen können, die wiederum beim Empfang im Gleichwellennetz stören.

Des Weiteren kann bedingt durch Verzerrungen des Sendesignals entlang der analogen Kommunikationsverbindungen eine leitungsselektive Amplituden- und Frequenzganganpassung entweder in der Steuereinrichtung oder in den einzelnen Funkzelleneinrichtungen vorgenommen werden. Verzerrte analoge Signale, insbesondere Unterschiede in Amplitude, Phase oder Frequenzgang weisen bei digitaler Ausstrahlung verschiedene Digitalkodierungen auf, wobei eine möglichst identische Digitalkodierung der auszusendenden Signale angestrebt ist, um kohärent identische digitale Signale frequenz- und phasengleich aussenden zu können. Durch verschiedene Leitungslängen, Leitungsreflexionen, Dämpfungen und anderer Leitungsstöreinflüsse können die Funkzelleneinrichtung unterschiedlich verzerrte analoge Sendesignale, insbesondere laufzeit- oder phasenverschobene und frequenzselektiv bzw. amplitudengedämpfte Signale der Steuereinrichtung erhalten. Diese können durch analoge oder digitale Phasen- Frequenz- und Amplitudenanpassungen, insbesondere Equalizer-Filter und frequenzselektive Verstärker in weitgehend identische analoge Signale umgewandelt werden, so dass die hieraus umgewandelten digitalen TETRA-Sendesignale zur phasen- und frequenzkohärenten Gleichwellenausstrahlung geeignet sind. Somit ist darauf hin zu wirken, dass NF-seitig die auszusendenden Signale möglichst amplituden- phasen- und frequenzidentisch an die Funkzelleneinrichtungen gelangen und HF-seitig phasen- und frequenzidentisch abgestrahlt werden. Hierzu sollten NF-seitig entsprechende Anpassungen wie individuell angepasste NF-Verstärker, Laufzeitglieder, Frequenzfilter etc. für die verschiedenen Leitungswege vorgesehen werden und HF-seitig hochidentische Verstärker und Sendegruppen eingesetzt werden.

Werden in den Funkzelleneinrichtungen herkömmliche TETRA-DMO-Repeater verwendet, so werden diese üblicherweise über eine PTT-Tastung zwischen Sende- und Empfangsbetrieb umgeschaltet. Hierzu ist es insbesondere vorteilhaft, dass die Steuereinrichtung über die Kommunikationsverbindung eine synchronisierte PTT-Tastung der Funkzelleneinrichtungen vornimmt, um diese effektiv zwischen Sende- und Empfangsbetrieb umschalten zu können.

Des Weiteren schlägt ein Ausführungsbeispiel des erfindungsgemäßen Verfahrens vor, dass der Empfang des digitalen Empfangssignals und die Abstrahlung des digitalen Sendesignals zumindest HF-seitig in den Funkzelleneinrichtungen getrennt erfolgt. Somit werden die Signalrichtungen in der Funkzelle zumindest auf HF-Seite elektrisch getrennt, sodass beispielsweise eine Empfangseinheit getrennt und unabhängig von der Sendeeinheit arbeiten kann. Dies hat insbesondere den Vorteil, dass bei Ausfall der Sendeeinheit die Empfangseinheit der Funkzelle weiterhin arbeitet, bzw. bei Ausfall der Empfangseinheit dennoch die Funkzelle als Sendeeinheit zur Verfügung steht, so dass eine Erhöhung der Redundanz und Verbesserung der Fehleranfälligkeit ermöglicht wird.

Darauf aufbauend ist durchaus denkbar und vorteilhaft, dass bezüglich der Kommunikationsverbindung zwischen Funkzelleneinrichtung und Steuereinrichtung die Verarbeitung der digitalen und analogen Empfangssignale als Downlink-Signale getrennt von der Verarbeitung der digitalen und analogen Sendesignale als Uplink-Signale vorgenommen wird, wobei der Empfang bzw. die Abstrahlung der Signale über das selbe Antennennetz erfolgt. Somit schlägt das Verfahren vor, zumindest in der Funkzelleneinrichtung, im Uplink und im Downlink sowohl HFals auch NF-seitig eine getrennte A/D-Wandlung, Steuerung der Sende- und Empfangseinheit sowie Abstrahlung und Empfang durchzuführen, so dass eine Erhöhung der Redundanz und eine einfache Implementation in vorhandenen Gleichwellen-Funksystemarchitekturen gewährleistet wird. Des Weiteren kann trotz HF-seitig getrennter Verarbeitung dasselbe Antennennetzwerk verwendet werden, um Signale zu empfangen und auszusenden.

Darüber hinaus ist es denkbar und vorteilhaft, dass zur Erhöhung der Gleichwellen-Stabilität eine Synchronisation der Frequenz- und Phasenlage der HF-Signale zum Empfang und/oder zur Abstrahlung über das Antennennetzwerk mittels einer Gleichwellen-Synchronisierungseinheit innerhalb jeder Funkzelleneinrichtung erfolgt. Dabei ist es durchaus weiterhin denkbar, dass die Funkzelleneinrichtungen untereinander jedenfalls über eine Gleichwellen-Synchronisierungseinheit miteinander verbunden sind, sodass alle Funkzelleneinheiten phasen- und frequenzsynchron empfangen und senden können.

Aufbauend auf der in der Vorrichtung bereits vorgeschlagenen Mehrfrequenz-Gleichwellen-Funkvorrichtung schlägt eine Weiterentwicklung des Verfahrens vor, dass ein von einem digitalsignalbasierten Endgerät gesendetes und durch mindestens eine Funkzelleneinrichtung, die zu einer von mindestens zwei Gleichwellen-Funkzellengruppen gehört, empfangenes digitales Empfangssignal durch die Funkzelleneinrichtung in ein analoges Empfangssignal gewandelt wird. Das empfangene analoge Signal wird dann erfindungsgemäß über eine steuernde Kommunikationsverbindung zu einer zentralen Funknetzsteuereinrichtung weitergeleitet, und dort wird das störungsärmste analoge Empfangssignal und somit die empfangende Funkzelleneinrichtung als Empfangsfunkzelle ausgewählt. Das analoge Empfangssignal der Empfangsfunkzelle wird dann im Wesentlichen an alle Funkzelleneinrichtungen der ersten und der zweiten an der Steuereinheit angeschlossenen Funkzellengruppen zur digitalen Gleichwellen-Abstrahlung als analoges Sendesignal weitergeleitet, wobei die Weiterleitung zumindest synchronisiert für alle Funkzelleneinrichtungen der ersten Funknetzgruppe und synchronisiert für alle Funkzelleneinrichtungen der zweiten Funknetzgruppe erfolgt. Mit anderen Worten sind an einer Funknetzsteuereinheit zwei Gruppen von Funkzelleneinrichtungen, die auf verschiedenen Frequenzen *f*₁ und *f*₂ arbeiten, angeschlossen. Empfängt eine Funkzelleneinrichtung der ersten oder auch der zweiten Funkzellengruppe ein Empfangssignal, so wird dieses über die Steuereinheit an alle angeschlossenen Funkzelleneinrichtungen der ersten und der zweiten Funkzellengruppe weitergeleitet. Dabei erfolgt die Abstrahlung innerhalb der ersten Funkzellengruppe synchron, und auch die Abstrahlung innerhalb der zweiten Funkzellengruppe erfolgt synchron. Eine synchronisierte Abstrahlung der ersten und der zweiten Funkzellengruppe ist dabei nicht erforderlich, kann jedoch im Hinblick auf einen echofreien Empfang auf der ersten sowie zweiten Frequenz *f*₁, *f*₂ vorteilhaft sein.

Dabei ist es durchaus denkbar, dass noch eine dritte, eine vierte oder noch mehr Funkzellengruppen angeschlossen sind, sodass insbesondere alle verfügbaren DMO-Kanäle mittels der Mehrfrequenz-Gleichwellen-Funknetzeinrichtung erreichbar sind. Ein solches Verfahren bietet sich insbesondere dann an, wenn innerhalb eines Gebäudes verschiedene Gebäudeteile mit unterschiedlichen Frequenzen zur Vermeidung von HFinduzierten Störungen versorgt werden sollen.

Schließlich kann das erfindungsgemäße Verfahren dahingehend weiterentwickelt werden, dass zwei grundsätzlich getrennte Gleichwellen-Funknetzvorrichtungen, die auf zwei Frequenzen *f*₁ und *f*₃ arbeiten, mittels einer Steuereinrichtungskommunikationsverbindung miteinander so verbunden werden, dass ein empfangenes Signal über beide oder mehrere Gleichwellen-Funknetzvorrichtungen abgestrahlt werden kann. So kann mittels eines solchen vorteilhaften Verfahrens ein von einem digitalsignalbasierten Endgerät gesendetes und durch mindestens eine Funkzelleneinrichtung, die zu einer ersten von mindestens zwei jeweils an einer von mindestens zwei Funknetzsteuervorrichtungen angeschlossenen Gleichwellen-Funkzellengruppen gehört, empfangenes digitales Empfangssignal durch die Funkzelleneinrichtung in ein analoges Empfangssignal gewandelt werden. Dieses analoge Empfangssignal wird dann über eine steuernde Kommunikationsverbindung an die an der empfangenden Funkzellengruppe angeschlossene erste Funknetzsteuereinrichtung weitergeleitet. Die empfangende erste Steuereinrichtung wählt das störungsärmste analoge Empfangssignal aller von den Funkzelleneinrichtungen empfangenen Empfangssignale aus, und wählt diese als Empfangszelle aus. Die weiterhin von der Empfangsfunkzelle empfangenen Signale werden anschließend an die zweite Steuervorrichtung mittels einer Steuereinrichtungskommunikationsverbindung weitergeleitet, und das analoge Empfangssignal der Empfangsfunkzelle wird durch die erste und die zweite Steuereinrichtung im Wesentlichen an alle Funkzelleneinrichtungen der ersten und dritten Funkzellengruppe zur digitalen Gleichwellen-Abstrahlung über die Frequenzen *f*₁ und *f*₃ als analoges Signal weitergeleitet, wobei die erste Steuereinrichtung die Weiterleitung synchronisiert für alle Funkzelleneinrichtungen der ersten Funknetzgruppe und die zweite Steuereinrichtung die Weiterleitung synchronisiert für alle Funkzelleneinrichtungen der dritten Funknetzgruppe vornimmt. In einer Abwandlung ist denkbar, dass die Kommunikation zwischen zweiter Steuereinheit und dritter Funknetzgruppe digitalbasiert ist.

Schließlich betrifft die Erfindung ein Verfahren zur Umrüstung einer bestehenden analogen Gleichwellen-Funkvorrichtung in eine TETRA-Gleichwellen-Funkvorrichtung, wobei die digitale Gleichwellen-Funkvorrichtung eine Vorrichtung entsprechend der Erfindung ist. Hierzu wird eine analoge Gleichwellen-Funkvorrichtung mit zumindest einer zentralen Steuereinheit, einer analogen Kommunikationsverbindung zwischen Steuereinheit und mindestens zwei Funkzelleneinrichtungen und einem Antennennetzwerk für jede Funkzelleneinrichtung betrachtet. Das Verfahren ist **dadurch gekennzeichnet, dass** die analogen Funkzelleneinrichtungen zu digitalen Funkzelleneinrichtungen umgebaut bzw. durch die digitalen Funkzelleneinrichtungen ersetzt werden, wobei zumindest die analoge Steuereinheit und die Kommunikationsverbindung der analogen Gleichwellen-Funkvorrichtung weiter für den Betrieb als Gleichwellen-Funknetzvorrichtung nutzbar bleiben. Mit diesem Verfahren lässt sich eine große Anzahl von bereits bestehenden Gleichwellen-Funknetzvorrichtungen in Gebäuden einfach dadurch in digitale Vorrichtungen umwandeln, dass die Funkzelleneinrichtungen durch digitale Funkzelleneinrichtungen ersetzt werden, wobei die Synchronisationsschnittstelle mit der Steuereinrichtung auf analoger Basis weiterbetrieben werden kann. Dies erspart gegenüber einer Umrüstung auf eine volldigitale Gleichwellen-Funknetzvorrichtung enorme Kosten und ermöglicht den Betrieb bereits vorhandener Anlagenteile.

Das Umrüstungsverfahren sieht insbesondere vor, die Verarbeitung der analogen Empfangs- und Sendesignale, insbesondere die 4-Draht-Kommunikationsverbindung, das Gleichwellen-Prinzip, die PTT-Tastung, die Arbeitsweise der Steuereinheit und hierbei insbesondere die Synchronisation der analogen Sendesignale im Wesentlichen identisch zur analogen Gleichwellen-Funkvorrichtung durchzuführen, und die wechselseitige Umsetzung von Analog- und Digitalsignalen lediglich in der Funkzelleneinrichtung zu verarbeiten. Durch diese Beibehaltung der synchronisierten Abstrahlung des Empfangs sowie der Auswahl der Empfangsfunkzelleneinrichtung wird der Weiterbetrieb der Steuereinrichtung und der Kommunikationsverbindung ermöglicht.

Im Folgenden wird die Erfindung anhand lediglich Ausführungsbeispiele zeigender Zeichnungen näher erläutert. Es zeigen:
- **Fig. 1**: in schematischer Darstellung einen TMO- und DMO-Betrieb eines Bündelfunksystems;
- **Fig. 2**: eine analoge Gleichwellen-Funknetzvorrichtung des Stands der Technik;
- **Fig. 3**: schematisch eine funkdigitale Funkzelleneinrichtung mit angeschlossenem LWL-Hub als Steuereinrichtung einer digitalen Gleichwellen-Funkvorrichtung mit einer Antenne bzw. einem Antennennetzwerk des Stands der Technik;
- **Fig. 4**: eine erste Ausführungsform einer digitalen Gleichwellen-Funknetzvorrichtung;
- **Fig. 5**: eine zweite Ausführungsform einer erfindungsgemäßen Gleichwellen-Funknetzvorrichtung mit analoger Synchronisation;
- **Fig. 6**: ein Ausführungsbeispiel einer erfindungsgemäßen Funkzelleneinrichtung;
- **Fig. 7**: ein weiteres Ausführungsbeispiel einer erfindungsgemäßen Funkzelleneinrichtung;
- **Fig. 8**: ein weiteres Ausführungsbeispiel einer erfindungsgemäßen Funkzelleneinrichtung;
- **Fig. 9**: eine weitere Ausführungsform einer erfindungsgemäßen Gleichwellen-Funknetzvorrichtung;
- **Fig. 10**: ein weiteres Ausführungsbeispiel einer erfindungsgemäßen Gleichwellen-Funknetzvorrichtung;
- **Fig. 11**: ein weiteres Ausführungsbeispiel einer digitalen Gleichwellen-Funknetzvorrichtung.

Die **Fig. 1a** und **1b** zeigen schematisch das Prinzip eines TMO- bzw. DMO-Betriebs eines Bündelfunkssystems nach dem Stand der Technik. Im TMO-Betrieb sendet eine Funknetzbasisstation (BTS - Base Transceiver Station) ein Funksignal zu einem Funkkommunikations-Endgerät 01. Hierzu kann die BTS-Station 02 nur innerhalb ihrer Antennen-Abstrahlreichweite 04 Signale empfangen bzw. aussenden. Wird eine Kommunikation zu entfernt befindlichen Funkkommunikations-Endgeräten 01 gewünscht, so kann die BTS 02 über beispielsweise eine gerichtete Funkfernverbindung einen Funknetz-TMO-Repeater 03 ansprechen, der innerhalb seiner Antennen-Abstrahlreichweite 04 insbesondere auf einer anderen Frequenz das entfernt befindliche Funkkommunikations-Endgerät 01 ansprechen kann. Der TMO-Repeater 03 ist in der Lage, die Netztopologie und die Trunked-Mode-Bündelfunkdienste in einem von der BTS 02 nicht erreichten Abstrahlgebiet zur Verfügung zu stellen.

Dahingegen zeigt **Fig. 1b** einen DMO-Repeaterbetrieb, bei dem ausgehend von einem ersten Funkkommunikations-Endgerät 01 eine Direktkommunikation mit einem zweiten Funkkommunikations-Endgerät 01 über einen DMO-Repeater 21 hergestellt wird. Der DMO-Repeater 21 befindet sich in Abstrahlreichweite des ersten Endgeräts 01. Das zweite Funkkommunikations-Endgerät 01 befindet sich zwar nicht in der Antennen-Abstrahlreichweite 04 des ersten Endgeräts 01, jedoch ebenfalls in der Abstrahlreichweite des DMO-Repeaters 21. Das erste Endgerät 01 sendet sein Sendesignal innerhalb seiner Abstrahlreichweite 04, dieses wird vom DMO-Repeater 21 empfangen und verstärkt in der Abstrahreichweite 04 des Repeaters 21 abgestrahlt. Somit sendet der Repeater 21 das empfangene Signal in den DMO-Betrieb unmittelbar weiter, und kann somit innerhalb seiner Antennen-Abstrahlreichweite 04 das zweite und gegebenenfalls beliebig viele Funkkommunikations-Endgeräte 01 erreichen, die dann alle an der DMO-Kommunikation beteiligt sind. Umgekehrt kann das zweite Endgerät 01 aufgrund der Reziprozitätsbeziehung ebenfalls über den DMO-Repeater 21 direkt mit dem ersten Endgerät 01 kommunizieren, so dass der Repeater 21 eine Relaisfunktion erfüllt.

Die **Fig. 2** zeigt eine aus dem Stand der Technik bekannte analoge Gleichwellen-Funknetzvorrichtung zur Versorgung und Aufrechterhaltung einer analogen Funkkommunikation innerhalb eines Gebäudes. Hierzu sind an einer Funksteuereinrichtung 06, die als Master bezeichnet wird, mittels 4-Draht-Leitungen, die eine steuernde Kommunikation ermöglichen, drei analoge DMO-Repeater 08 angeschlossen. Jeder analoge DMO-Repeater 08 umfasst ein Antennennetzwerk 09 zum Empfang und zur synchronisierten Abstrahlung von Signalen von bzw. zu einem nicht dargestellten Endgerät 01. Wird über das Antennennetzwerk 09 ein Signal eines Funkkommunikations-Endgerätes 01 empfangen, so wird dieses über den analogen DMO-Repeater 08 und die 4-Draht-Steuerleitung 07 an die Mastersteuereinrichtung 06 übermittelt. Diese wertet die Empfangsfeldstärke bzw. die Qualität des analogen Signals aus, und wählt diejenige Funkzelleneinrichtung 08, die das qualitativ hochwertigste Empfangssignal liefert, als Empfangsfunkzelle aus. Qualitativ hochwertig bedeutet in diesem Zusammenhang einen hohen Signalrauschabstand und geringstmögliche Störungen der Sprachkommunikation, die nach einem aus dem Stand der Technik bekannten Verfahren bestimmt werden können. Daran anschließend übermittelt die Mastersteuereinheit 06 das empfangene Signal als Sendesignal synchronisiert an alle angeschlossenen Funkzelleneinrichtungen 08, damit diese dem Gleichwellenprinzip folgend eine synchrone Abstrahlung über ihre Antennennetzwerke 09 vornehmen können. Auf diesem Wege wird ein empfangenes Funkkommunikationssignal innerhalb des gesamten Gebäudes weitergeleitet, sodass alle im Gebäude befindlichen Kommunikations-Endgeräte 01 erreicht werden können.

Die **Fig. 3a** zeigt schematisch eine aus dem Stand der Technik bekannte digitale Funkzelleneinrichtung 10 für einen TETRA-Repeaterbetrieb, wie sie beispielsweise zur Reichweitenerhöhung einer BTS 02 verwendet werden kann. Die Funkzelleneinrichtung 10 entspricht in ihrer Funktion einem TETRA-HF-Repeater, der sich aus einem Antennennetzwerk 09 sowie einer Steuereinrichtung 13, die einen Antennenverstärker umfasst, zusammensetzt. Die Steuereinrichtung 13 dient der unmittelbaren Ansteuerung und Anpassung des Antennennetzwerks 09 und kann beispielsweise eine KaiTec Repeater Control Unit RCU 2010 sein. Des Weiteren umfasst die digitale Funkzelleneinrichtung 10 zwei redundant ausgelegte HF-Sendeempfangseinheiten als HF-Repeater 14, die jeweils bei Ausfall eines Repeaters 14 eine Störungsmeldung über eine Störungsmeldungsverbindung 16 an die Steuereinrichtung 13 abgeben können, so dass diese auf den redundanten Repeater 14 zur Erhöhung der Betriebssicherheit umschalten kann. Die Steuereinrichtung 13 kann hierzu die beiden HF-Repeater 14 an ihren HF-Ausgängen überwachen und steuern. Darüber hinaus sind die digitalen HF-Sendeempfangseinheiten 14 über zwei Lichtwellenleiter 15 digital an einen Lichtwellen-HUB angeschlossen. Aus diesem Grund umfassen die HF-Repeater 14 eine interne Umsetzereinheit, die die meist WDM-kodierten digitalen Signale (Wavelength Division Multiplex) in HF-Antennensignale zur Abstrahlung umwandelt. Der LWL-Hub wiederum ist über eine Schnittstelle zu einer nicht dargestellten TETRA-BTS-Steuerzentrale insbesondere für einen TMO-Betrieb umfasst. Solche Funkzellen-Repeatereinrichtungen für einen TETRA-Betrieb dienen insbesondere für eine Tunnelversorgung, beispielsweise für Eisenbahntunnels zur Aufrechterhaltung der TMO-Funktionalität im Tunnel.

Hierzu zeigt **Fig. 3b** eine bereits verwendete TETRA-Repeater-Antennennetzwerktopologie, in der mehrere HF-Repeater 10 für einen TMO-Betrieb über ein LWL-Kabelnetz 15 an einen LWL-Hub angeschlossen sind, der wiederum mit einer nicht dargestellten BTS 01 verbunden ist. Somit lässt sich ein TETRA-TMO-Repeaternetzwerk schaffen, um insbesondere Tunnel oder unterversorgte Gebiete und größere Anlagen mittels mehrerer mit einer BTS verbundener HF-Repeater 10 zu versorgen. Jedoch benötigt ein solches Tetra-TMO-Repeaternetzwerk eine hohe Frequenzbandbreite, entsprechenden Hardwareaufwand, der sich in sehr hohen Anschaffungs- und Betriebskosten widerspiegelt, und ist für eine BOS-Gebäudeversorgung, für die ein DMO-Betrieb ausreichend ist, schlichtweg überdimensioniert und zu teuer.

Aus den aus dem Stand der Technik bekannten TETRA-Funknetzen und Funkzelleneinrichtungen ist kein Gleichwellenbetrieb auf Basis einer DMO-Kommunikation bekannt. So wird in **Fig. 4** als erstes Ausführungsbeispiel ein rein digitales TETRA-DMO-Gleichwellensystem schematisch dargestellt. Die vollständig digital arbeitende Gleichwellen-Funkvorrichtung 17 umfasst hierzu drei als TETRA-DMO-Repeater ausgebildete Funkzelleneinrichtungen 10, die über digitale Kommunikationsverbindungen 12 mit einer Steuereinrichtung 11 (Master), die einen Lichtwellen-HUB umfasst, verbunden sind. Die Signalverarbeitung erfolgt durchgängig auf digitaler Ebene, wobei der Lichtwellen-HUB 11 dazu dient, die digitalen Signale zwischen den einzelnen Funkzelleneinrichtungen weiterzuleiten und wobei jegliche Intelligenz in den Funkzelleneinrichtungen 10 zu finden ist, um die synchronisierte Abstrahlung mittels in den Digitalsignalen enthaltener Timinginformationen durchzuführen. Hierbei ist es nicht notwendig, die bereits empfangenen digitalen Signale in analoge Signale, die typischerweise eine Qualitätsverschlechterung mit sich ziehen, umzuwandeln. Das gesamte System arbeitet auf rein digitaler Basis, wobei kein synchronisierender Eingriff der Steuereinrichtung 11 notwendig ist, sondern mittels zeit- oder phasenkodierter Informationen innerhalb der digitalen Signale die einzelnen Funkzelleneinrichtungen selbstständig eine synchrone Abstrahlung vornehmen können. So kann die Auswahl der Empfangsfunkzelleneinrichtung auf Basis eines BER-Wertes (Bit Error Rate) oder anderer digital vorliegender Empfangsqualitätsparameter getroffen werden.

Anstelle eines Lichtwellenleiters können die Funkzelleneinrichtungen 10 über drahtgebundene LAN-Verbindungen, serielle oder parallele Computerverbindungen oder ein schnelles Computernetz mit der Steuereinrichtung 11 verbunden sein. Des weiteren ist denkbar, eine steuernde Kommunikationsverbindung 12 drahtlos über WLAN herzustellen. Auch können Powerlineverbindungen eingesetzt werden, die eine Datenübertragung über das Stromversorgungsnetz ermöglicht. Schließlich kann ein Gateway zum Internet verwendet werden, um gebäudeintern oder gebäudeübergreifend zwei oder mehrere Funkzelleneinrichtungen 10 mit der Steuereinrichtung 11 zu verbinden. Hierdurch ergibt sich die Möglichkeit, bei einer schnellen Internetverbindung sehr weit entfernte Gebäudekomplexe in ein gemeinsames Gleichwellennetzwerk zusammenzufassen. Die Kommunikation über Internet kann über speziell eingerichtete Internetserver gesteuert werden, so dass selektiv Gebäude oder Gebäudeteile zu- oder abgeschaltet werden können, Frequenz- oder Phasenversatz eingestellt oder externe Sprach- und Steuersignale ein- oder ausgekoppelt werden können.

Zur Realisierung der Kommunikationsverbindung 12 ist auch eine Kombination von zwei oder mehreren der vorgenannten Verbindungstechniken denkbar, sofern diese eine für die Anforderungen des Gleichwellenprinzips ausreichende Datenübertragungsgeschwindigkeit und Bandbreite besitzen. So kann beispielsweise ein Teil der Funkzelleneinrichtungen 10 über Lichtwellenleiter 15, sowie ein Teil über eine LAN-Verbindung angesprochen werden, sowie mehrere zwar räumlich benachbarte, aber baulich getrennte Funkzelleneinrichtungen 10 über Internet mit der Steuereinrichtung 11 verbunden sein.

Auf der anderen Seite ist es denkbar, in digitalen Gleichwellen-Funknetzvorrichtungen eine analoge Signalverarbeitung zur Kommunikation zwischen Funkzelleneinrichtungen 10 und Steuereinrichtung 06 durchzuführen. So bestehen erhebliche Vorteile darin, in einem TETRA-DMO-Gleichwellensystem eine analoge Signalverarbeitung bei der Signalweitergabe zwischen Funkeinrichtung und Steuereinrichtung zwischenzuschalten, die zwar typischerweise Qualitätsverschlechterungen beinhaltet und "veraltete" Technik nutzt, um eine synchronisierte Abstrahlung zu erreichen, jedoch geringe Hardwareanforderungen stellt, auf bewährte und günstig zur Verfügung stehende Technik zurückgreift, und eine einfache Umrüstung bereits vorhandener analoger Anlagen ermöglicht. **Fig. 5** zeigt ein solches zweites Ausführungsbeispiel einer digitalen Gleichwellen-Funknetzvorrichtung, bei der Funknetzeinrichtungen 10 über analoge Kommunikationsverbindungen 07, die als 4-Draht-Leitungen ausgelegt sind, mit einer zentralen analogen Funknetz-Steuereinrichtung 06 verbunden sind. Die beispielsweise aufgeführten drei DMO-TETRA-HF-Repeater 10 sind mit einer von der Steuereinheit 06 umfassten Empfangsdiversity 19, die zum Erkennen des qualitätsbesten Empfangssignals und Bestimmen einer Empfangsfunkzelle sowie zur synchronen Weiterleitung des empfangenen Signals als analoges Sendesignal synchronisiert zu den Funkzelleneinrichtungen 10 ausgelegt ist, verbunden. Somit kann ein solches TETRA-DMO-Gleichwellensystem eine bereits vorhandene Infrastruktur, umfassend Leitungsverbindungen 04, Steuereinrichtung 06 und Empfangs-Diversity 19, eines analogen Gleichwellensystems nutzen.

Hierzu zeigt **Fig. 6** ein Ausführungsbeispiel einer digitalen Funkzelleneinrichtung, die in der Gleichwellen-Funknetzvorrichtung der **Fig. 5** eingesetzt werden kann. Die digitale Funkzelleneinrichtung 10 umfasst einen DMO-Repeater 21, der auf TETRA-Basis digital kodierte Signale HF-mäßig abstrahlen und digital zu einer A/D-Wandlungs- und Steuereinheit 20 abgeben kann, die A/D-D/A-Konvertereinheit 20 wandelt die digitalen Signale in analoge Signale um, die über die als 4-Draht-Leitung ausgelegte analoge Kommunikationsvorrichtung zu einer Mastersteuereinheit 06 übertragen werden können. Dort werden die Empfangssignale synchron an alle und somit auch an den empfangenden DMO-Repeater weitergeleitet, wobei diese wiederum durch die A/D-D/A-Steuer- und Wandlungseinheit 20 in digitale Signale umgewandelt werden, die mittels des DMO-Repeaters 21 synchron abgestrahlt werden können.
**Fig. 7** zeigt schematisch alternativ zu der in **Fig. 6** dargestellten Funkzelleneinrichtung 10 eine weitere Funkzelleneinrichtung 10, bei der sowohl auf HF- als auch auf NF-Seite ein vollständig getrennter Aufbau zwischen Downlink- und Uplinkpfad für Empfangs- und Sendesignale eingerichtet ist. Hierzu umfasst die Funkzelleneinrichtung 10 ein Antennennetzwerk 09, das HF-seitig Empfangssignale empfangen und als Downlink weitergeben kann sowie im Uplink HF-Signale abstrahlen kann. Die im Downlink empfangenen HF-Signale werden einem DMO-Repeater 01, der als Downlink-Antennenempfangseinheit dient, zugeführt. Dieser wandelt die HF-kodierten Signale (meist PSK-ähnliche Verfahren) in digitale Signale um, die einer D/A-Downlink-Wandlungs- und Steuereinheit 25 zugeführt werden. Der D/A-Konverter 25 wandelt die digitalen Signale in analoge Downlinksignale um, die über die 4-Draht-Kommunikationssteuerleitung 07 an eine analog arbeitende Funknetzsteuereinrichtung 06 (nicht dargestellt) weitergeleitet werden können. Diese Funknetzsteuereinrichtung nimmt anschließend die Auswahl des qualitativ besten Empfangssignals, und die synchronisierte Weitergabe der zu sendenden Signale an alle angeschlossenen Funkzelleneinrichtungen 10 vor. Somit empfängt die in **Fig. 7** dargestellte Funkzelleneinrichtung 10 ebenfalls über die 4-Draht-Kommunikationsverbindungsleitung 07 analoge Uplinksignale, die der A/D-Uplink-Wandlungs- und Steuereinheit 24 zugeführt werden. Diese wandelt daraus digitale Signale im Uplink, die einem HF-seitig vom DMO-Repeater 23 getrennten DMO-Repeater 22 zugeführt werden, so dass diese über das gemeinsame Antennenetzwerk 09 digital kodiert synchron mit allen anderen im Gleichwellennetz befindlichen Funkzelleneinrichtungen abgestrahlt werden können. Die in **Fig. 7** dargestellte Funkzelleneinrichtung stellt eine sowohl HF-seitige wie auch analog-digitalseitige getrennte Einheit für die Verarbeitung der digitalen und analogen Sende- und Empfangssignale dar.

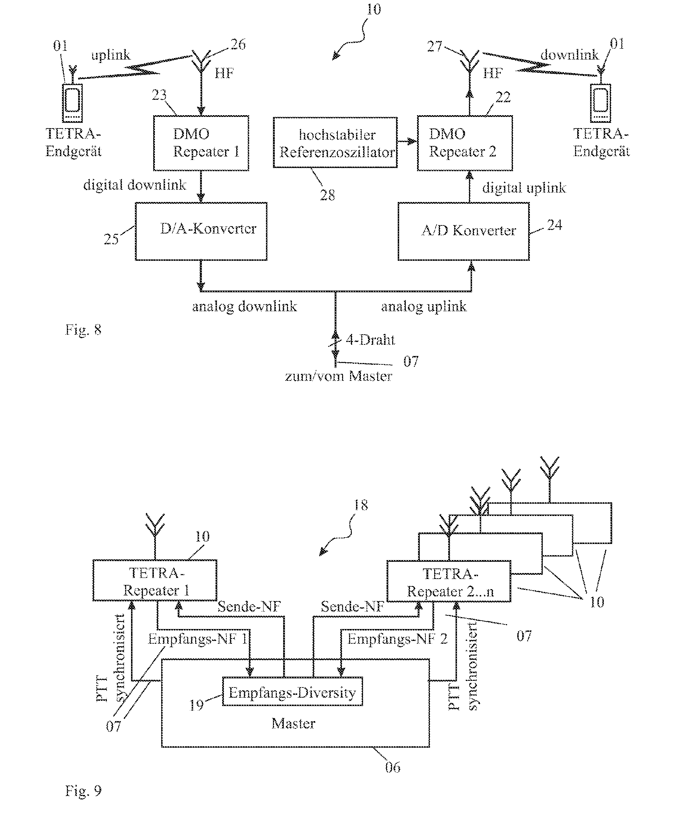

**Fig. 8** zeigt ein weiteres Ausführungsbeispiel einer Funkzelleneinrichtung 10, die ebenfalls eine HF-seitige wie auch eine digital-analogseitige Trennung der Empfangs- und Sendesignale vornimmt. Somit entspricht die in **Fig. 8** dargestellte Funkzelleneinrichtung 10 der in **Fig. 7** dargestellten Funkzelleneinrichtung und umfasst weiterhin einen hochstabilen Referenzoszillator als Gleichwellen-Synchronisierungseinheit 28, der im HF-Bereich einen amplituden-, frequenz- und phasensynchronen Betrieb von dem DMO-Repeater 1 als digitale Empfangseinheit 23 und dem DMO-Repeater 2 als digitale Sendeeinheit 22 bewirkt. Jedoch können die Referenzoszillator in gewissen Toleranzbereichen der einzelnen Funkzelleneinrichtung voneinander abweichen, ohne dass die Funktionsfähigkeit der Gleichwellenkommunikation leidet. Mittels der Funkzelleneinrichtung 10 kann ein von einem TETRA-Endgerät 01 im Uplink abgestrahltes Empfangssignal über ein Downlink-Antennennetzwerk 26 empfangen, über den Downlink-Antennenempfangseinheit 23 digital gewandelt, und mittels der D/A-Downlink-Wandlungs- und Steuereinheit 25 in ein analoges Signal umgewandelt werden, das über eine analog basierte 4-Draht-Kommunikationsteuerleitung zu einer Steuereinrichtung 06 weitergeleitet werden kann. Dort erfolgt die Auswahl des qualitativ besten Empfangssignals und ein synchrones Weiterleiten dieses Empfangssignals an alle angeschlossenen Funkzelleneinrichtungen 10, wobei im analogen Uplink das analoge Signal in der Funkzelleneinrichtung mittels der A/D-Uplink-Wandlungs- und Steuereinheit 24 in ein digitales Uplinksignal umgewandelt wird, das mittels des DMO-Repeaters 02 als Uplink-Antennenabstrahleinheit 22 über ein Uplink-Antennennetzwerk 27 abgestrahlt werden kann. Hierzu umfasst die Funkzelleneinrichtung 10 ein Downlink- und ein Uplink-Antennennetzwerk, die elektrisch getrennt sein können.

Die **Fig. 9** zeigt schematisch ein weiteres Ausführungsbeispiel einer solchen "hybrid" arbeitenden Gleichwellen-Funknetzvorrichtung 18, in der mehrere Funkzelleneinrichtungen 10 als TETRA-HF-Repeater 1 bis N mittels einer Mastersteuereinrichtung 06 synchronisiert ein empfangenes Signal abstrahlen können. Hierzu ist der TETRA-HF-Repeater 10 mittels Analogsignal-Steuerleitungen 07 mit seiner Empfangs-NF 1 sowie einer PTT-Synchronisationsleitung und einer Sende-NF-Leitung mit dem Master 06 verbunden. Des Weiteren sind weitere TETRA-HF-Repeater 2 bis N ebenfalls über Empfangsleitungen NF 2 bis NF N sowie über mehrere Sende-NF-Leitungen und PTT-Synchronisationsleitungen zur synchronisierten Abstrahlung des Empfangssignals an die Steuereinrichtung 06 angeschlossen.

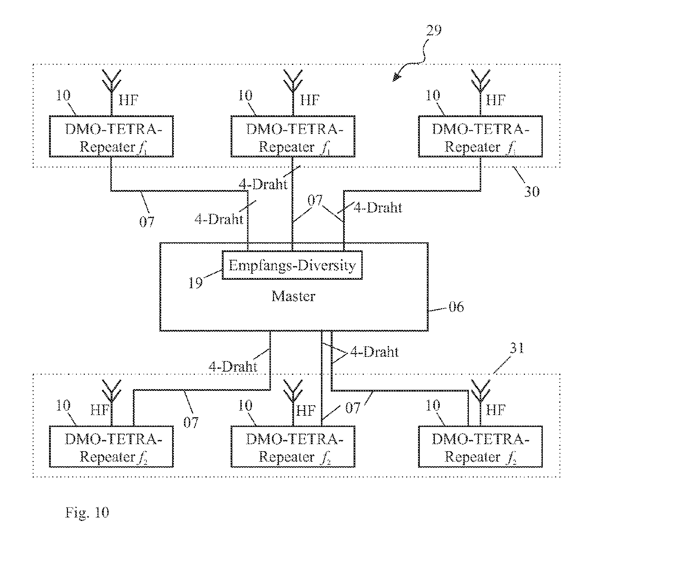

**Fig. 10** zeigt in einem weiteren Ausführungsbeispiel eine mögliche Weiterentwicklung der erfindungsgemäßen Gleichwellen-Funknetzvorrichtung, bei der an der Mastersteuereinrichtung 06 zwei Gruppen von Funkzelleneinrichtungen 30 und 31 angeschlossen sind, wobei die erste Gruppe 30 von Funkzelleneinrichtungen 10 mit einer Gleichwellen-Frequenz *f*₁ arbeitet und die zweite Gruppe 31 von Funkzelleneinrichtungen 10 mit einer zweiten Gleichwellen-Funkfrequenz *f*₂ arbeitet. Jede Funkzelleneinrichtung 10 jeder Funkzellengruppe 30, 31 ist mit der Mastersteuereinrichtung 06 verbunden. Wird über eine der Frequenzen *f*₁ oder *f*₂ ein Signal von einer Funkzelleneinrichtung 10 empfangen, so wird dieses über die analogen Verbindungsleitungen 07 an die Mastersteuereinrichtung 06 weitergeleitet, wobei dort eine Synchronisation der Funkzellengruppen getrennt für die erste Funkzellengruppe 30 und zweite Funkzellengruppe 31 stattfindet. Somit wird ein synchronisiertes Sendesignal über die erste Funkzellengruppe 30 mit der Frequenz *f*₁ ausgestrahlt und über die zweite Funkzellengruppe 02 über die zweite Gleichwellenfrequenz *f*₂. Hierdurch verbindet die Mehrfrequenz-Gleichwellen-Funkvorrichtung 29 die Kanäle des gleichen Funknetzes *f*₁ und *f*₂ und kann somit auf mehreren Kanälen einen DMO-Betrieb gewährleisten.

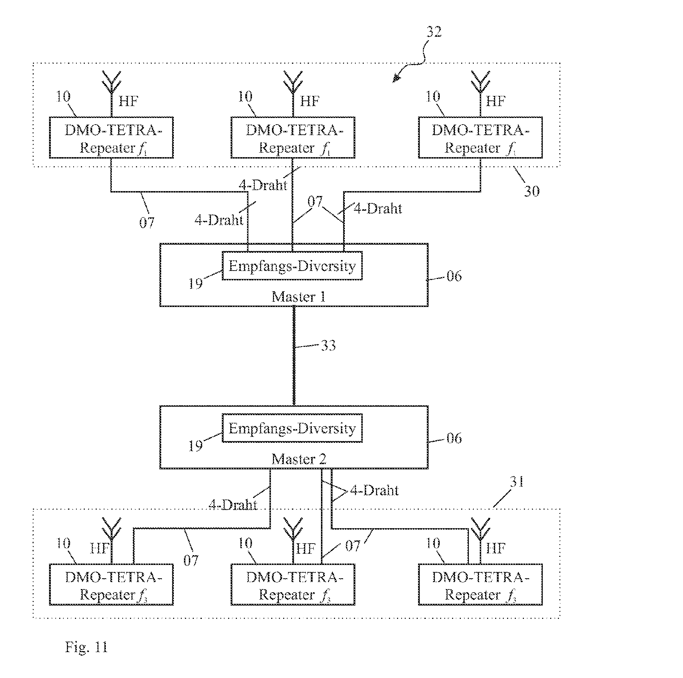

Schließlich zeigt **Fig. 11** eine Weiterentwicklung der in **Fig. 9** oder **10** vorgestellten Gleichwellen-Funkvorrichtungen, die grundsätzlich aus zwei einfachen Gleichwellen-Funkvorrichtungen entsprechend der Erfindung besteht. Eine erste Gleichwellen-Funknetzvorrichtung definiert eine Funkzellengruppe 30, die mit einer Gleichwellen-Frequenz *f*₁ arbeitet, wobei die Funkzelleneinrichtungen 10 an eine erste Master-1-Steuereinrichtung 06 angeschlossen sind. Des Weiteren umfasst die Gleichwellen-Funkvorrichtung 32 eine zweite Master-2-Steuereinrichtung 06, an der eine zweite Gruppe von Funkzelleneinrichtungen 31, die auf einer Gleichwellen-Funkfrequenz *f*₃ empfangen und abstrahlen können, angeschlossen ist. Das Besondere an diesem Ausführungsbeispiel liegt darin, dass die erste Master-Steuereinrichtung 06 über eine Steuereinrichtungs-Kommunikationsverbindung 33 mit der zweiten Master-Steuereinrichtung 06 verbunden ist. Empfängt eine der Funkzelleneinrichtungen 10 der ersten oder dritten Gruppe 30, 31 der Funknetzeinrichtung ein Empfangssignal, so wird dieses in der entsprechenden Funknetzsteuereinrichtung 06 als Empfangssignal ausgewählt und über die Steuereinrichtungs-Kommunikationsverbindung 33 an die zweite Funkzellensteuereinrichtung 06 weitergeleitet. Die beiden Funkzellensteuereinrichtungen 06 tragen Sorge, dass das empfangene Signal jeweils über die erste Funkzellengruppe 30 und die dritte Funkzellengruppe 31 synchron abgestrahlt wird, wobei die beiden Funkzelleneinrichtungen untereinander keine synchrone Abstrahlung vornehmen müssen. Die Steuereinrichtungskommunikationsverbindung 33 kann analog oder digital, draht- oder funkbasiert eine Übertragung des empfangenen Signals vornehmen, und stellt somit eine bidirektonale Verbidnung dar, die lediglich zur Kopplung der beiden Gleichwellen-Funknetzvorrichtungen dient. Mit Hilfe dieses Ausführungsbeispiels ist es sehr einfach möglich, die Gleichwellen-Funknetzvorrichtungen benachbarter Gebäude oder verschiedener baulicher Einheiten zu koppeln, um auf mehreren Frequenzen eine einheitliche Kommunikation im DMO-Betrieb zu realisieren.

Es bleibt zu erwähnen, dass Kombinationen der in den **Fig. 10** **und** **11** dargestellten Gleichwellensysteme vorteilhaft möglich sind, so dass beispielsweise an einer einzigen Steuereinrichtung 06, 11 zwei oder mehrere Gleichwellengruppen von Funkzelleneinrichtungen 30, 31 verschiedener Frequenz zur Bildung mehrerer miteinander in Kommunikation stehender Gleichwellensysteme angeschlossen sind, wobei wiederum zwei oder mehrere solcher Gleichwellensysteme durch Verbindung der jeweiligen Steuereinrichtungen 06, 11 miteinander in Kommunikation stehen, so dass beispielsweise ein empfangenes Signal mit einer Frequenz *f*₁ auf mehreren DMO-Frequenzen *f*₁-*f*ₙ in mehreren autarkt arbeitenden Gleichwellensystemen abstrahlbar ist, gegebenenfalls kann benutzerseitig eine Einstellung erfolgen, ob die Kommunikation auf einer, auf mehreren oder auf allen Gleichwellengruppen erfolgen soll. Auch ist denkbar, dass hierbei digital und analog synchronisierte Gleichwellengruppen miteinander verbunden sind, beispielsweise durch eine Verbindung zwischen einer durch Umrüstung aus einer analogen Bestandsanlage hervorgehenden analog synchronisierten digitalen Gleichwellenvorrichtung eines Altbaugebäudeteils und einer volldigitalen Gleichwellenvorrichtung eines Neubaugebäudeteils.

## Patentansprüche

1. TETRA-DMO-Gleichwellen-Funknetzvorrichtung, umfassend mindestens eine zentrale Funknetz-Steuereinrichtung (06, 11) und mindestens zwei für digitalcodierte Funksignale vorgesehene Funkzelleneinrichtungen (10) zur Gleichwellen-Funkkommunikation von digitalsignalbasierten Endgeräten (01), wobei die Funkzelleneinrichtungen (10) über eine Kommunikationsverbindung (07) in steuernder Kommunikation mit der Steuereinrichtung (06, 11) zur synchronisierten Abstrahlung mindestens eines von mindestens einer Funkzelleneinrichtung (10) empfangenen digitalen Empfangssignals eines Endgeräts (01) stehen, **dadurch gekennzeichnet, dass** die Funkzelleneinrichtung (10) eine digitaltaugliche Downlink-Funkempfangseinheit (23) und eine digitaltaugliche Uplink-Funksendeeinheit (22) umfasst, wobei die Empfangseinheit (23) ein digitalbasiertes Funkkommunikationssignal als digitales Empfangssignal empfangen und die Sendeeinheit ein digitalbasiertes Funkkommunikationssignal als digitales Sendesignal synchron steuerbar abstrahlen kann.

2. Vorrichtung nach Anspruch 1, **dadurch gekennzeichnet, dass** die Sendeeinheit (22) und die Empfangseinheit (23) jeweils einen TETRA-DMO-Repeater umfassen.

3. Vorrichtung nach Anspruch 1 oder 2,
**dadurch gekennzeichnet,**
**dass** die steuernde Kommunikationsverbindung (07) eingerichtet ist, um digital kodierte Sende- und Empfangssignale zwischen Funkzelleneinrichtung (10) und Steuereinrichtung (11) zur synchronisierten Abstrahlung des empfangenen digitalen Empfangssignals auszutauschen, wobei die Abstrahlung auf Basis von digitalen Synchronisierungsinformationen, die von jeder Funkzelleneinrichtung (10) über die Kommunikationsverbindung (07) von der Steuereinrichtung (11) empfangen wurden, innerhalb der Funkzelleneinrichtung (10) synchronisiert mit allen weiteren Fukzelleneinrichtungen (10) erfolgt.

4. Vorrichtung nach Anspruch 1 oder 2,
**dadurch gekennzeichnet,**
**dass** die steuernde Kommunikationsverbindung (07) eingerichtet ist, um analog kodierte Sende- und Empfangssignale zwischen Funkzelleneinrichtung (10) und Steuereinrichtung (06) zur synchronisierten Abstrahlung des empfangenen digitalen Empfangssignals auszutauschen, insbesondere dass die steuernde Kommunikationsverbindung (07) eine Drahtleitung, insbesondere eine 4-Draht-Leitung, ist.

5. Vorrichtung nach Anspruch 4,
**dadurch gekennzeichnet,**
**dass** die Funkzelleneinrichtung (10) mindestens einen TETRA-DMO-Repeater (21) und mindestens eine A/D-Wandlungs- und Steuereinheit (20) zur wechselseitigen A/D-Wandlung der Sende- und Empfangssignale umfasst.

6. Vorrichtung nach Anspruch 5,
**dadurch gekennzeichnet,**
**dass** die Funkzelleneinrichtung (10) eine D/A-wandelnde Downlink-Wandlungs- und Steuereinheit (25) umfasst, die der Empfangseinheit (23) nachgeschaltet ist und die das digitale Empfangssignal der Empfangseinheit in ein analoges Empfangssignal zur Weiterleitung über die Kommunikationsverbindung (07) zur Steuereinrichtung (06) wandeln kann;
und eine A/D-wandelnde Uplink-Wandlungs- und Steuereinheit (25) umfasst, die der Sendeeinheit (22) vorgeschaltet ist und die das analoge Sendesignal, das von der Steuereinrichtung (06) über die Kommunikationsverbindung (07) synchronisiert an alle Funkzelleneinrichtungen (10) weitergeleitet wird, in ein digitales Sendesignal zur Abstrahlung über die Sendeeinheit (22) wandeln kann.

7. Vorrichtung nach einem der vorangegangenen Ansprüche,
**dadurch gekennzeichnet,**
**dass** die Funkzelleneinrichtung (10) eine Gleichwellen-Synchronisierungseinheit (28) umfasst, die den Sendebetrieb der Sendeeinheit (22) mit allen übrigen Funkzelleneinrichtungen (10) HF-synchronisieren kann.

8. Vorrichtung nach Anspruch 4,
**dadurch gekennzeichnet,**
**dass** die Steuereinrichtung (06) eine Funkzellen-Multiplexeinheit (19) umfasst, die die analogen Empfangssignale aller Funkzelleneinrichtungen (10) aufnehmen kann, eine Beurteilung des störungsärmsten Empfangssignals vornehmen kann, und dieses Empfangssignal als analoges Sendesignal synchronisiert an im Wesentlichen alle Funkzelleneinrichtungen (10) zur digitalen Abstrahlung zuführen kann.

9. Vorrichtung nach einem der vorangegangen Ansprüche,
**dadurch gekennzeichnet,**
**dass** die Funknetz-Steuereinrichtung (06, 11) in steuernder Kommunikation mit mindestens zwei Gruppen (30, 31) von Funkzelleneinrichtungen (10) steht, wobei eine erste synchronisiert abstrahlende Gleichwellen-Funkzellengruppe (30) mit einer Gleichwellenfrequenz *f*₁ und eine zweite synchronisiert abstrahlende Gleichwellen-Funkzellengruppe (31) mit einer Gleichwellenfrequenz *f*₂ sendet und empfängt, wobei eine gemeinsame Abstrahlung eines von mindestens einer Funkzelleneinrichtung (10) der ersten oder zweiten Funkzellengruppe (30, 31) empfangenen digitalen Empfangssignals durch die erste Funkzellengruppe (30) und die zweite Funkzellengruppe (31) erfolgen kann.

10. Vorrichtung nach einem der vorangegangen Ansprüche,
**dadurch gekennzeichnet,**
**dass** die Vorrichtung mindestens eine zweite Funknetz-Steuereinrichtung (06, 11) mit angeschlossenen Funkzelleneinrichtungen (10) umfasst, wobei die an der ersten Funknetz-Steuereinrichtung (06) angeschlossenen Funkzelleneinrichtungen (10) eine erste synchronisiert abstrahlende Gleichwellen-Funkzellengruppe (30) mit einer Gleichwellenfrequenz *f*₁ definieren und die an der zweiten Funknetz-Steuereinrichtung (06) angeschlossenen Funkzelleneinrichtungen (10) eine dritte Gleichwellen-Funkzellengruppe (31) mit einer Gleichwellenfrequenz *f*₃ definieren, wobei die erste Funknetz-Steuereinrichtung (06) und die zweite Funknetz-Steuereinrichtung (06, 11) zur gemeinsamen Abstrahlung eines von mindestens einer Funknetzeinrichtung (06) der ersten oder dritten Funkzellengruppe (30, 31) empfangenen digitalen Signals verbunden sind.

11. Verfahren zum Betrieb einer TETRA-DMO-Gleichwellen-Funkkommunikationsvorrichtung nach einem der vorangegangenen Vorrichtungsansprüche,
**dadurch gekennzeichnet,**
**dass** ein von einem digitalsignalbasierten Endgerät (01) gesendetes und durch mindestens eine Funkzelleneinrichtung (10) empfangenes digitales Empfangssignal über eine steuernde Kommunikationsverbindung (07) zu einer zentralen Funknetz-Steuereinrichtung (06, 11) weitergeleitet wird;
die Steuereinrichtung (06, 11) die das störungsärmste Empfangssignal empfangende Funkzelleneinrichtung (10) als Empfangsfunkzelle auswählt;
und das Empfangssignal der Empfangsfunkzelle im Wesentlichen an alle Funkzelleneinrichtungen (10) zur digitalen Gleichwellen-Abstrahlung weiterleitet, wobei die synchronisierte digitale Gleichwellen-Abstrahlung bevorzugt im Wesentlichen frequenz- und phasengleich erfolgt.

12. Verfahren nach Anspruch 11,
**dadurch gekennzeichnet,**
**dass** die steuernde Kommunikationsverbindung (07) das Empfangssignal und das synchronisierend abzustrahlende Sendesignal digital kodiert überträgt, wobei zur Weiterleitung des synchronisierend abzustrahlenden Sendesignals digitale Synchronisierungsinformationen von der Steuereinrichtung (11) an die Funkzelleneinrichtungen (10) übermittelt werden, auf deren Basis die Funkzelleneinrichtungen (10) die synchronisierte Abstrahlung des Sendesignals vornehmen.

13. Verfahren nach Anspruch 11,
**dadurch gekennzeichnet,**
**dass** das durch mindestens eine Funkzelleneinrichtung (10) empfangene digitale Empfangssignal durch die Funkzelleneinrichtung (10) in ein analoges Empfangssignal gewandelt wird;
das analoge Empfangssignal über die steuernde Kommunikationsverbindung (07) zu der zentralen Funknetz-Steuereinrichtung (06) weitergeleitet wird;
die Steuereinrichtung (06) die das störungsärmste analoge Empfangssignal empfangende Funkzelleneinrichtung (10) als Empfangsfunkzelle auswählt;
und das analoge Empfangssignal der Empfangsfunkzelle im Wesentlichen an alle Funkzelleneinrichtungen (10) zur digitalen Gleichwellen-Abstrahlung als synchronisiertes analoges Sendesignal weiterleitet.

14. Verfahren nach Anspruch 13,
**dadurch gekennzeichnet,**
**dass** die Steuereinrichtung (06) zur synchronisierten Abstrahlung die Laufzeiten der analogen Empfangs- und/oder Sendesignale zu den Funkzelleneinrichtungen (10) misst, und das ausgewählte analoge Empfangssignal unter Berücksichtigung unterschiedlicher Laufzeiten und Leitungsstöreinflüsse zur zeitgleichen NF-amplituden-, NF- und HF- phasen- und NF- und HF-frequenzsynchronisierten Abstrahlung an alle Funkzelleneinrichtungen (10) als analoges Sendesignal weiterleitet.

15. Verfahren nach Anspruch 13 oder 14,
**dadurch gekennzeichnet,**
**dass** die Steuereinrichtung (06) über die Kommunikationsverbindung (07) eine synchronisierte PTT-Tastung der Funkzelleneinrichtungen (10) vornimmt.

16. Verfahren nach einem der vorangegangenen Verfahrensansprüche,
**dadurch gekennzeichnet,**
**dass** der Empfang des digitalen Empfangssignals und die Abstrahlung des digitalen Sendesignals zumindest HF-seitig getrennt erfolgen.

17. Verfahren nach einem der Ansprüche 13 bis 15,
**dadurch gekennzeichnet,**
**dass** bezüglich der Kommunikationsverbindung (07) zwischen Funkzelleneinrichtung (10) und Steuereinrichtung (06) die Verarbeitung der digitalen und analogen Empfangssignale als Downlink-Signale getrennt von der Verarbeitung der digitalen und analogen Sendesignale als Uplink-Signale vorgenommen wird, wobei der Empfang bzw. die Abstrahlung der Signale über dasselbe Antennennetzwerk (09) erfolgt.

18. Verfahren nach Anspruch 13 für eine Vorrichtung nach Anspruch 9,
**dadurch gekennzeichnet,**
**dass** ein von einem digitalsignalbasierten Endgerät (01) gesendetes und durch mindestens eine Funkzelleneinrichtung (10), die zu einer von mindestens zwei Gleichwellen-Funkzellengruppen (30,31) gehört, empfangenes digitales Empfangssignal durch die Funkzelleneinrichtung (10) in ein analoges Empfangssignal gewandelt wird;
das analoge Empfangssignal über eine steuernde Kommunikationsverbindung (07) zu einer zentralen Funknetz-Steuereinrichtung (06) weitergeleitet wird;
die Steuereinrichtung (06) die das störungsärmste analoge Empfangssignal empfangende Funkzelleneinrichtung (10) als Empfangsfunkzelle auswählt;
und das analoge Empfangssignal der Empfangsfunkzelle im Wesentlichen an alle Funkzelleneinrichtungen (10) der ersten (30) und zweiten Funkzellengruppe (31) zur digitalen Gleichwellen-Abstrahlung als analoges Sendesignal weiterleitet, wobei die Weiterleitung synchronisiert für alle Funkzelleneinrichtungen (10) der ersten Funknetzgruppe (30) und synchronisiert für alle Funkzelleneinrichtungen (10) der zweiten Funknetzgruppe (31) erfolgt.

19. Verfahren nach Anspruch 13 oder 18 für eine Vorrichtung nach Anspruch 10,
**dadurch gekennzeichnet,**
**dass** ein von einem digitalsignalbasierten Endgerät (01) gesendetes und durch mindestens eine Funkzelleneinrichtung (10), die zu einer ersten von mindestens zwei jeweils an einer von mindestens zwei Funknetz-Steuereinrichtungen (06) angeschlossenen Gleichwellen-Funkzellengruppen (30, 31) gehört, empfangenes digitales Empfangssignal durch die Funkzelleneinrichtung (10) in ein analoges Empfangssignal gewandelt wird;
das analoge Empfangssignal über eine steuernde Kommunikationsverbindung (07) an die erste, an der ersten empfangenden Funkzellengruppe (30, 31) angeschlossenen Funknetz-Steuereinrichtung (06) weitergeleitet wird;
die empfangende erste Steuereinrichtung (06) die das störungsärmste analoge Empfangssignal empfangende Funkzelleneinrichtung (10) als Empfangsfunkzelle auswählt;
das Empfangssignal an die zweite Steuereinrichtung (06) mittels einer Steuereinrichtung-Kommunikationsverbindung (33) weiterleitet und das analoge Empfangssignal der Empfangsfunkzelle durch die erste und die zweite Steuereinrichtung (06) im Wesentlichen an alle Funkzelleneinrichtungen (10) der ersten (30) und dritten Funkzellengruppe (31) zur digitalen Gleichwellen-Abstrahlung als analoges Sendesignal weiterleitet, wobei die erste Steuereinrichtung (06) die Weiterleitung synchronisiert für alle Funkzelleneinrichtungen (10) der ersten Funknetzgruppe (30) und die zweite Steuereinrichtung (06) die Weiterleitung synchronisiert für alle Funkzelleneinrichtungen (10) der dritten Funknetzgruppe (31) vornimmt.

20. Verfahren zur Umrüstung einer bestehenden analogen Gleichwellenfunkvorrichtung (05) in eine TETRA-DMO-Gleichwellenfunkvorrichtung (18) nach dem Vorrichtungsanspruch 5,
wobei die analoge Gleichwellenfunkvorrichtung (05) zumindest eine zentrale Steuereinrichtung (06), eine analoge Kommunikationsverbindung (07) zwischen der Steuereinrichtung (06) und mindestens zwei Funkzelleneinrichtungen (08) und ein Antennennetzwerk (09) für jede Funkzelleneinrichtung (08) umfasst,
**dadurch gekennzeichnet,**
**dass** die analogen Funkzelleneinrichtungen (08) zu digitalen Funkzelleneinrichtungen (10) umgebaut bzw. durch digitale Funkzelleneinrichtungen (10) ersetzt werden, wobei zumindest die Steuereinrichtung (06) und die Kommunikationsverbindung (07) der analogen Gleichwellenfunkvorrichtung (05) weiter nutzbar bleiben, wobei insbesondere die Verarbeitung der analogen Empfangs- und Sendesignale, insbesondere 4-Draht-Kommunikationsverbindung (07), Gleichwellenprinzip, PTT-Taktung, Arbeitsweise der Steuereinrichtung (06) und hierbei insbesondere die Synchronisation der analogen Sendesignale, im Wesentlichen identisch zu der analogen Gleichwellenfunkvorrichtung (05) durchgeführt wird, und die wechselseitige Umsetzung von Analog- und Digitalsignalen lediglich in den Funkzelleneinrichtungen (10) erfolgt.

## Claims

1. TETRA-DMO single-frequency radio network device, comprising at least one central radio network control unit (06, 11) and at least two radio cell units (10) intended for digital-coded radio signals for single-frequency radio communication of digital signal-based terminals (01), where the radio cell units (10) are in controlling communication with the control unit (06, 11) via a communication link (07) for synchronized emission of at least one digital reception signal of a terminal (01) received by at least one radio cell unit (10), **characterized in that** the radio cell unit (10) comprises a digital-capable downlink radio receiver unit (23) and a digital-capable uplink radio transmitter unit (22), where the receiver unit (23) can receive a digital-based radio communication signal as a digital reception signal and the transmitter unit can emit a digital-based radio communication signal as a digital transmission signal in synchronously controllable manner.

2. Device according to claim 1, **characterized in that** the transmitter unit (22) and the receiver unit (23) each comprise a TETRA-DMO-repeater.

3. Device according to claim 1 or 2,
**characterized in**
**that** the controlling communication link (07) is established to exchange digitally coded transmission and reception signals between the radio cell unit (10) and the control unit (11) for synchronized emission of the received digital reception signal, where the emission is effected inside the radio cell unit (10) and synchronized with all further radio cell units (10) on the basis of digital synchronization information received by each radio cell unit (10) from the control unit (11) via the communication link (07).

4. Device according to Claim 1 or 2,
**characterized i n**
that the controlling communication link (07) is equipped to exchange analog-coded transmission and reception signals between the radio cell unit (10) and the control unit (06) for synchronized emission of the received digital reception signal, in particular that the controlling communication link (07) is a wire cable, in particular a 4-wire cable.

5. Device according to Claim 4,
**characterized i n**
that the radio cell unit (10) comprises at least one TETRA-DMO repeater (21) and at least one A/D conversion and control unit (20) for reciprocal A/D conversion of the transmission and reception signals.

6. Device according to Claim 5,
**characterized in**
**that** the radio cell unit (10) comprises a D/A-converting downlink conversion and control unit (25) which is connected behind the receiver unit (23) and which can convert the digital reception signal of the receiver unit into an analog reception signal for passing on to the control unit (06) via the communication link (07);
and comprises an A/D-converting uplink conversion and control unit (25) which is connected in front of the transmitter unit (22) and which can convert the analog transmission signal, which is passed on in synchronized manner from the control unit (06) to all radio cell units (10) via the communication link (07), into a digital transmission signal for emission via the transmitter unit (22).

7. Device according to one of the preceding claims,
**characterized in**
**that** the radio cell unit (10) comprises a single-frequency synchronization unit (28) which can HF-synchronize the transmission mode of the transmitter unit (22) with all other radio cell units (10).

8. Device according to Claim 4,
**characterized in**
**that** the control unit (06) comprises a radio cell n-multiplex unit (19) which can receive the analog reception signals of all radio cell units (10), make an evaluation of the lowest-interference reception signal and pass this reception signal in synchronized manner as an analog transmission signal to substantially all radio cell units (10) for digital emission.

9. Device according to one of the preceding claims,
**characterized in**
**that** the radio network control unit (06, 11) is in controlling communication with at least two groups (30, 31) of radio cell units (10), where a first single-frequency radio cell group (30) emitting in synchronized manner transmits and receives with a single frequency *f*₁ and a second single-frequency radio cell group (31) emitting in synchronized manner transmits and receives with a single frequency *f*₂, where a common emission of a digital reception signal received from at least one radio cell unit (10) of the first or second radio cell group (30, 31) can be effected by the first radio cell group (30) and by the second radio cell group (31).

10. Device according to one of the preceding claims,
**characterized in**
**that** the device comprises at least one second radio network control unit (06, 11) with connected radio cell units (10), where the radio cell units (10) connected to the first radio network control unit (06) define a first single-frequency radio cell group (30) emitting in synchronized manner with a single frequency *f*₁ and the radio cell units (10) connected to the second radio network control unit (06) define a third single-frequency radio cell group (31) with a single frequency *f*₃, where the first radio network control unit (06) and the second radio network control unit (06, 11) are linked for common emission of a digital signal received by at least one radio network unit (06) of the first or third radio cell group (30, 31).

11. Method for operating a TETRA-DMO single-frequency radio communication device according to one of the preceding device claims,
**characterized in**
**that** a digital reception signal transmitted from a digital signal-based terminal (01) and received by at least one radio cell unit (10) is passed on to a central radio network control unit (06, 11) via a controlling communication link (07);
the control unit (06, 11) selects the radio cell unit (10) receiving the lowest-interference reception signal as the receiving radio cell;
and passes on the reception signal of the receiving radio cell substantially to all radio cell units (10) for digital single-frequency emission, where the synchronized digital single-frequency emission is preferably effected with substantially the same frequency and phase.

12. Method according to Claim 11,
**characterized in**
**that** the controlling communication link (07) transmits the reception signal and the transmission signal to be emitted for synchronization purposes in digitally coded form, where for passing on of the transmission signal to be emitted for synchronization purposes digital synchronization information is transferred from the control unit (11) to the radio cell units (10), on the basis of which information the radio cell units (10) perform the synchronized emission of the transmission signal.

13. Method according to Claim 11,
**characterized in**
**that** the digital reception signal received by at least one radio cell unit (10) is converted by the radio cell unit (10) into an analog reception signal;
the analog reception signal is passed on to the central radio network control unit (06) via the controlling communication link (07);
the control unit (06) selects the radio cell unit (10) receiving the lowest-interference analog reception signal as the receiving radio cell;
and passes on the analog reception signal of the receiving radio cell substantially to all radio cell units (10) for digital single-frequency emission as a synchronized analog transmission signal.

14. Method according to Claim 13,
**characterized in**
**that** for synchronized emission the control unit (06) measures the propagation times of the analog reception and/or transmission signals to the radio cell units (10) and passes on the selected analog reception signal to all radio cell units (10) as an analog transmission signal, taking into account different propagation times and line interference effects for simultaneous NF amplitude-synchronized, NF and HF phase-synchronized and NF and HF frequency-synchronized emission.

15. Method according to Claim 13 or 14,
**characterized in**
**that** the control unit (06) performs via the communication link (07) a synchronized PTT scan of the radio cell units (10).

16. Method according to one of the preceding method claims,
**characterized in**
**that** the reception of the digital reception signal and the emission of the digital transmission signal are effected separately at least on the HF side.

17. Method according to one of claims 13 to 15,
**characterized in**
**that** with regard to the communication link (07) between the radio cell unit (10) and the control unit (06) the processing of the digital and analog reception signals is performed as downlink signals separately from the processing of the digital and analog transmission signals as uplink signals, where the reception and the emission of the signals are effected via the same antenna network (09).

18. Method according to claim 13 for a device according to claim 9,
**characterized in**
**that** a digital reception signal transmitted from a digital signal-based terminal (01) and received by at least one radio cell unit (10) belonging to one of at least two single-frequency radio cell groups (30,31) is converted by the radio cell unit (10) into an analog reception signal;
the analog reception signal is passed on to a central radio network control unit (06) via a controlling communication link (07); the control unit (06) selects the radio cell unit (10) receiving the lowest-interference analog reception signal as the receiving radio cell;
and passes on the analog reception signal of the receiving radio cell substantially to all radio cell units (10) of the first (30) and second radio cell group (31) for digital single-frequency emission as an analog transmission signal, where this passing on is effected in synchronized manner for all radio cell units (10) of the first radio network group (30) and in synchronized manner for all radio cell units (10) of the second radio network group (31).

19. Method according to claim 13 or 18 for a device according to claim 10,
**characterized in**
**that** a digital reception signal transmitted from a digital signal-based terminal (01) and received by at least one radio cell unit (10) belonging to a first group of at least two single-frequency radio cell groups (30, 31) each connected to one of at least two radio network control units (06) is converted by the radio cell unit (10) into an analog reception signal;
the analog reception signal is passed on via a controlling communication link (07) to the first radio network control unit (06) connected to the first receiving radio cell group (30, 31);
the receiving first control unit (06) selects the radio cell unit (10) receiving the lowest-interference analog reception signal as the receiving radio cell;
passes on the reception signal to the second control unit (06) by means of a control unit communication link (33);
and passes on the analog reception signal of the receiving radio cell through the first and the second control unit (06) substantially to all radio cell units (10) of the first (30) and third radio cell group (31) for digital single-frequency emission as an analog transmission signal, where the first control unit (06) performs said passing on in synchronized manner for all radio cell units (10) of the first radio network group (30) and the second control unit (06) performs said passing on in synchronized manner for all radio cell units (10) of the third radio network group (31).

20. Method for converting an existing analog single-frequency radio device (05) into a TETRA-DMO single-frequency radio device (18) according to the device claim 5, where the analog single-frequency radio device (05) comprises at least one central control unit (06), an analog communication link (07) between the control unit (06) and at least two radio cell units (08), and an antenna network (09) for each radio cell unit (08),
**characterized in**
**that** the analog radio cell units (08) are converted to or replaced by digital radio cell units (10), where at least the control unit (06) and the communication link (07) of the analog single-frequency radio device (05) remain usable, where in particular the processing of the analog reception and transmission signals, in particular the 4-wire communication link (07), the single-frequency principle, PTT scanning, mode of operation of the control unit (06) and here in particular the synchronization of the analog transmission signals, is performed substantially identically as for the analog single-frequency radio device (05), and the reciprocal conversion of analog and digital signals is effected only in the radio cell units (10).

## Revendications

1. Dispositif de réseau radio isofréquence TETRA DMO, comprenant au moins un organe central de commande de réseau radio (06, 11) et au moins deux dispositifs à cellules radio (10) prévus pour signaux radio à codage numérique pour la communication par radio isofréquence entre terminaux (01) à base de signaux numériques, sachant que via une liaison de communication (07), les dispositifs à cellules radio (10) sont en communication directrice avec l'organe de commande (06, 11) pour l'émission synchronisée d'au moins un signal de réception numérique d'un terminal (01) reçu par au moins un dispositif à cellules radio (10), **caractérisé en ce que** le dispositif à cellules radio (10) comprend une unité radio réceptrice compatible numérique en liaison descendante (23) et une unité radio émettrice compatible numérique en liaison montante (22), sachant que l'unité réceptrice (23) peut recevoir un signal de communication par radio à base numérique en tant que signal de réception numérique et que l'unité émettrice peut émettre de manière réglable en synchronisme un signal de communication par radio à base numérique en tant que signal d'émission numérique.

2. Dispositif selon la revendication 1 , **caractérisé en ce que** l'unité émettrice (22) et l'unité réceptrice (23) comprennent chacune un répéteur TETRA DMO.

3. Dispositif selon la revendication 1 ou 2,
**caractérisé en ce**
**que** la liaison de communication directrice (07) est établie pour échanger des signaux d'émission et de réception à codage numérique entre le dispositif à cellules radio (10) et l'organe de commande (11) pour une émission synchronisée du signal de réception numérique reçu, sachant que l'émission a lieu dans le dispositif à cellules radio (10) en synchronisme avec tous les autres dispositifs à cellules radio (10), sur la base d'informations de synchronisation reçues de l'organe de commande (11) par chaque dispositif à cellules radio (10) via la liaison de communication (07).

4. Dispositif selon la revendication 1 ou 2,
**caractérisé en ce**
**que** la liaison de communication directrice (07) est établie pour échanger des signaux d'émission et de réception à codage analogique entre le dispositif à cellules radio (10) et l'organe de commande (06) pour une émission synchronisée du signal de réception numérique reçu, en particulier en ce que la liaison de communication directrice (07) est un conducteur filaire, en particulier un conducteur à 4 fils.

5. Dispositif selon la revendication 4,
**caractérisé en ce**
**que** le dispositif à cellules radio (10) comprend au moins un répéteur TETRA DMO (21) et au moins une unité de conversion A/N et de commande (20) pour une conversion A/N réciproque des signaux d'émission et de réception.

6. Dispositif selon la revendication 5,
**caractérisé en ce**
**que** le dispositif à cellules radio (10) comprend une unité de conversion N/A en liaison descendante et de commande (25), qui est placée en aval de l'unité réceptrice (23) et qui peut convertir le signal de réception numérique de l'unité réceptrice en un signal de réception analogique pour transmission à l'organe de commande (06) via la liaison de communication (07) ;
et comprend une unité de conversion A/N en liaison montante et de commande (25), qui est placée en amont de l'unité émettrice (22) et qui peut convertir le signal d'émission analogique, transmis de manière synchronisée par l'organe de commande (06) via la liaison de communication (07) à tous les dispositifs à cellules radio (10), en un signal d'émission numérique pour émission par l'unité émettrice (22).

7. Dispositif selon l'une des revendications précédentes,
**caractérisé en ce**
**que** le dispositif à cellules radio (10) comprend une unité de synchronisation isofréquence (28) qui peut synchroniser en HF le mode de transmission de l'unité émettrice (22) avec tous les autres dispositifs à cellules radio (10).

8. Dispositif selon la revendication 4,
**caractérisé en ce**
**que** l'organe de commande (06) comprend une unité de multiplexage de cellules radio (19) qui peut recevoir les signaux de réception de tous les dispositifs à cellules radio (10), peut procéder à une évaluation du signal de réception le moins perturbé et peut acheminer de manière synchronisée ce signal de réception en tant que signal d'émission analogique à quasiment tous les dispositifs à cellules radio (10) pour son émission numérique.

9. Dispositif selon l'une des revendications précédentes,
**caractérisé en ce**
**que** l'organe de commande de réseau radio (06, 11) est en communication directrice avec au moins deux groupes (30, 31) de dispositifs à cellules radio (10), sachant qu'un premier groupe de cellules radio (30) émettant en isofréquence de manière synchronisée émet et reçoit avec une fréquence commune *f*₁, et qu'un deuxième groupe de cellules radio (31) émettant en isofréquence de manière synchronisée émet et reçoit avec une fréquence commune *f*₂, sachant qu'une émission commune d'un signal de réception numérique reçu par au moins un dispositif à cellules radio (10) du premier ou du deuxième groupe de cellules radio (30, 31) peut être réalisée par le premier groupe de cellules radio (30) et le deuxième groupe de cellules radio (31).

10. Dispositif selon l'une des revendications précédentes,
**caractérisé en ce**
**que** le dispositif comprend au moins un deuxième organe de commande de réseau radio (06, 11) avec dispositifs à cellules radio (10) connectés, sachant que les dispositifs à cellules radio (10) connectés au premier organe de commande de réseau radio (06) définissent un premier groupe de cellules radio émettant en isofréquence de manière synchronisée (30) avec une fréquence commune *f*₁, et que les dispositifs à cellules radio (10) connectés au deuxième organe de commande de réseau radio (06) définissent un troisième groupe de cellules radio isofréquence (31) avec une fréquence commune *f*₃, sachant que le premier organe de commande de réseau radio (06) et le deuxième organe de commande de réseau radio (06, 11) sont reliés pour une émission commune d'un signal numérique reçu par au moins un dispositif de réseau radio (06) du premier ou du troisième groupe de cellules radio (30, 31).

11. Procédé pour exploiter un dispositif de communication par radio isofréquence TETRA DMO selon l'une des revendications de dispositif précédentes,
**caractérisé en ce**
**qu'**un signal de réception numérique émis par un terminal (01) à base de signaux numérique et reçu par au moins un dispositif à cellules radio (10) est transmis via une liaison de communication directrice (07) à un organe central de commande de réseau radio (06, 11) ;
**que** l'organe de commande (06, 11) sélectionne en tant que cellule radio réceptrice le dispositif à cellules radio (10) recevant le signal de réception le moins perturbé ;
et retransmet le signal de réception de la cellule radio réceptrice à quasiment tous les dispositifs à cellules radio (10) pour émission numérique en isofréquence, sachant que l'émission numérique en isofréquence synchronisée a lieu de préférence essentiellement en fréquence identique et coïncidence de phase.

12. Procédé selon la revendication 11,
**caractérisé en ce**
**que** la liaison de communication directrice (07) retransmet en codage numérique le signal de réception et le signal d'émission à émettre à des fins de synchronisation, sachant que pour la retransmission du signal d'émission à émettre à des fins de synchronisation, l'organe de commande (11) transmet aux dispositifs à cellules radio (10) des informations de synchronisation numériques sur la base desquelles les dispositifs à cellules radio (10) procèdent à l'émission synchronisée du signal d'émission.

13. Procédé selon la revendication 1 1 ,
**caractérisé en ce**
**que** le signal de réception numérique reçu par au moins un dispositif à cellules radio (10) est converti en signal de réception analogique par le dispositif à cellules radio (10) ;
**que** le signal de réception analogique est retransmis via la liaison de communication directrice (07) à l'organe central de commande de réseau radio (06) ;
**que** l'organe de commande (06) sélectionne en tant que cellule radio réceptrice le dispositif à cellules radio (10) recevant le signal de réception analogique le moins perturbé ;
et retransmet le signal de réception analogique de la cellule radio réceptrice en tant que signal d'émission analogique synchronisé à quasiment tous les dispositifs à cellules radio (10) pour émission numérique en isofréquence.

14. Procédé selon la revendication 13,
**caractérisé en ce**
**que** pour une émission synchronisée, l'organe de commande (06) mesure les temps de propagation des signaux analogiques de réception et/ou d'émission vers les dispositifs à cellules radio (10), et retransmet à tous les dispositifs à cellules radio (10) le signal de réception analogique sélectionné en tant que signal d'émission analogique, en tenant compte des temps de propagation différents et d'influences perturbatrices en ligne pour une émission simultanée et synchronisée en amplitudes BF, phases BF et HF et fréquences BF et HF.

15. Procédé selon la revendication 13 ou 14,
**caractérisé en ce**
**que** l'organe de commande (06) procède, via la liaison de communication (07), à un balayage PTT synchronisé des dispositifs à cellules radio (10).

16. Procédé selon l'une des revendications de procédé précédentes,
**caractérisé en ce**
**que** la réception du signal de réception numérique et l'émission du signal d'émission numérique ont lieu séparément au moins côté HF.

17. Procédé selon l'une des revendications 13 à 15,
**caractérisé en ce**
**qu'**en ce qui concerne la liaison de communication (07) entre le dispositif à cellules radio (10) et l'organe de commande (06), le traitement des signaux de réception numériques et analogiques est effectué en tant que signaux en liaison descendante et séparément du traitement des signaux d'émission numériques et analogiques en tant que signaux en liaison montante, sachant que la réception et l'émission des signaux sont assurées par le même réseau d'antennes (09).

18. Procédé selon la revendication 13 pour un dispositif selon la revendication 9,
**caractérisé en ce**
**qu'**un signal de réception numérique émis par un terminal (01) à base de signaux numériques et reçu par au moins un dispositif à cellules radio (10) appartenant à l'un d'au moins deux groupes de cellules radio isofréquence (30,31), est converti en un signal de réception analogique par le dispositif à cellules radio (10) ;
**que** le signal de réception analogique est retransmis via une liaison de communication directrice (07) à un organe central de commande de réseau radio (06) ;
**que** l'organe de commande (06) sélectionne en tant que cellule radio réceptrice le dispositif à cellules radio (10) recevant le signal de réception analogique le moins perturbé ;
et retransmet en tant que signal d'émission analogique le signal de réception analogique de la cellule radio réceptrice à quasiment tous les dispositifs à cellules radio (10) du premier (30) et du deuxième groupes de cellules radio (31) pour émission numérique en isofréquence, sachant que la retransmission a lieu de manière synchronisée pour tous les dispositifs à cellules radio (10) du premier groupe de réseaux radio (30) et de manière synchronisée pour tous les dispositifs à cellules radio (10) du deuxième groupe de réseaux radio (31).

19. Procédé selon la revendication 13 ou 18 pour un dispositif selon la revendication 10,
**caractérisé en ce**
**qu'**un signal de réception numérique émis par un terminal (01) à base de signaux numériques et reçu par au moins un dispositif à cellules radio (10) appartenant à un premier d'au moins deux groupes de cellules radio isofréquence (30, 31) respectivement connectés à l'un d'au moins deux organes de commande de réseau radio (06), est converti en un signal de réception analogique par le dispositif à cellules radio (10) ;
**que** le signal de réception analogique est retransmis via une liaison de communication directrice (07) au premier organe de commande de réseau radio (06) connecté au premier groupe de cellules radio récepteur (30, 31) ;
**que** le premier organe de commande récepteur (06) sélectionne en tant que cellule radio réceptrice le dispositif à cellules radio (10) recevant le signal de réception analogique le moins perturbé ;
retransmet le signal de réception au deuxième organe de commande (06) via une liaison de communication d'organes de commande (33)
et retransmet le signal de réception analogique de la cellule radio réceptrice en tant que signal d'émission analogique via le premier et le deuxième organes de commande (06) à quasiment tous les dispositifs à cellules radio (10) du premier (30) et du troisième groupes de cellules radio (31) pour émission numérique en isofréquence, sachant que le premier organe de commande (06) procède à la retransmission de manière synchronisée pour tous les dispositifs à cellules radio (10) du premier groupe de réseaux radio (30), et que le deuxième organe de commande (06) procède à la retransmission de manière synchronisée pour tous les dispositifs à cellules radio (10) du troisième groupe de réseaux radio (31).

20. Procédé pour transformer un dispositif radio analogique isofréquence existant (05) en un dispositif radio isofréquence TETRA DMO (18) selon la revendication de dispositif 5, sachant que le dispositif radio analogique isofréquence (05) comprend au moins un organe central de commande (06), une liaison de communication analogique (07) entre l'organe de commande (06) et au moins deux dispositifs à cellules radio (08), et un réseau d'antennes (09) pour chaque dispositif à cellules radio (08),
**caractérisé en ce**
**que** les dispositifs à cellules radio analogiques (08) sont transformés en dispositifs à cellules radio numériques (10) ou remplacés par des dispositifs à cellules radio numériques (10), sachant qu'au moins l'organe de commande (06) et la liaison de communication (07) du dispositif radio analogique isofréquence (05) restent encore exploitables, et qu'en particulier le traitement des signaux analogiques de réception et 'émission, en particulier la liaison de communication à 4 fils (07), le principe d'isofréquence, le balayage PTT, le mode opératoire de l'organe de commande (06) et, dans ce cas, en particulier la synchronisation du signal d'émission analogique, sont réalisés pour l'essentiel de manière identique au dispositif radio analogique isofréquence (05), et que la conversion réciproque de signaux analogiques et numériques a lieu uniquement dans les dispositifs à cellules radio (10).
